# FASCICULE DE BREVET EUROPEEN

(11) **EP 2 963 516 B1**
(45) Date de publication et mention de la délivrance du brevet: **19.10.2016**
(21) Numéro de dépôt: 15172651.0
(22) Date de dépôt: 18.06.2015
(51) Int. Cl.: G05D 1/08, G05D 1/10

(54) **SYSTÈME ET PROCÉDÉ DE COMMANDE DE VOL EN TENUE DE TRAJECTOIRE POUR UN AÉRONEF À VOILURE TOURNANTE**
FLUGSTEUERUNGSSYSTEM UND -VERFAHREN ZUR BEIBEHALTUNG EINER FLUGBAHN FÜR DREHFLÜGELFLUGZEUG
A FLIGHT CONTROL SYSTEM AND METHOD WITH TRACK MAINTENANCE FOR A ROTARY WING AIRCRAFT

(30) Priorité: 30.06.2014 FR 1401470
(43) Date de publication de la demande: 06.01.2016
(73) Titulaire: Airbus Helicopters, 13725 Marignane Cedex (FR)
(72) Inventeur: SALESSE-LAVERGNE, Marc, 13190 ALLAUCH (FR)
(74) Mandataire: Pouillot, Laurent Pierre Paul

(56) Documents cités:
- EP-A1- 2 597 035
- EP-B1- 0 601 122
- WO-A2-2012/134447
- FR-A1- 2 756 252
- FR-A1- 2 991 664

## Description

La présente invention est du domaine des systèmes de commande de vol des aéronefs à voilures tournantes et plus particulièrement des assistances à l'utilisation de ces commandes de vol telles qu'un pilote automatique.

La présente invention concerne un système de commande de vol en tenue de trajectoire pour un aéronef à voilure tournante et plus particulièrement un système de commande de vol « full enveloppe », c'est-à-dire couvrant aussi bien les phases de vol près du sol à basse vitesse qu'à hautes altitudes et à grande vitesse. La présente invention concerne également un procédé de commande de vol en tenue de trajectoire pour un aéronef à voilure tournante.

Les aéronefs à voilures tournantes sont des appareils volants qui se distinguent principalement des autres aéronefs motorisés par leur capacité à évoluer aussi bien en vol de croisière à vitesses élevées qu'en vol à basses vitesses ou en vol stationnaire. Une telle capacité est procurée par l'exploitation d'au moins un rotor principal à axe de rotation sensiblement vertical équipant l'aéronef.

Ce rotor principal constitue une voilure tournante procurant la sustentation, voire aussi la propulsion de l'aéronef. Le comportement de l'aéronef à voilure tournante en vol peut être modifié à partir d'une variation du pas cyclique et/ou du pas collectif des pales de la voilure tournante. Une variation du pas cyclique des pales induit une modification du comportement de l'aéronef en assiette, et plus particulièrement en tangage et/ou en roulis. Une variation du pas collectif des pales induit une modification du comportement de l'aéronef en sustentation, pouvant générer des déplacements particulièrement suivant un axe sensiblement vertical, mais également suivant ses axes de tangage et de roulis selon l'assiette de l'aéronef.

L'aéronef à voilure tournante est aussi manoeuvrable en lacet sur lui-même, à partir de l'exploitation d'un dispositif anticouple en lacet. Par exemple, un tel dispositif anticouple est formé d'un rotor de queue à axe de rotation sensiblement horizontal situé à l'arrière de l'aéronef. Un tel rotor arrière comporte plusieurs pales dont généralement uniquement le pas collectif est variable bien que le pas cyclique puisse également être variable.

Un aéronef à voilure tournante comporte généralement un seul rotor principal et un rotor arrière anticouple. Cependant, un aéronef à voilure tournante peut également comporter deux rotors principaux contrarotatifs, par exemple en tandem ou bien coaxiaux, aucun dispositif anticouple n'étant alors nécessaire.

De plus, un hélicoptère hybride est un aéronef à voilure tournante comportant au moins un rotor principal, procurant principalement sa sustentation et à moindres mesures sa propulsion, et au moins un moyen de propulsion spécifique tel qu'une hélice propulsive. Un tel hélicoptère hybride permet de couvrir de grandes distances et d'évoluer avec une vitesse d'avancement élevée. Le dispositif anticouple de cet hélicoptère hybride peut être formé par l'une au moins des hélices propulsives. Une telle hélice propulsive comporte plusieurs pales dont généralement uniquement le pas collectif est variable.

En outre, un aéronef à voilure tournante peut comporter des éléments aérodynamiques tels que des empennages, voire des ailes dans le cas des hélicoptères hybrides notamment. Ces éléments aérodynamiques peuvent comporter des parties mobiles et participent à la manoeuvrabilité de l'aéronef et notamment lors de vol de croisière à des vitesses d'avancement élevées.

Une variation du comportement en vol de l'aéronef à voilure tournante peut alors être réalisée à partir d'une modification de différents paramètres de vol de l'aéronef. Ces différents paramètres de vol concernent notamment les valeurs de pas cyclique et/ou collectif des rotors principaux ainsi que la valeur de pas collectif du rotor anticouple et/ou des moyens de propulsion et les éventuels éléments aérodynamiques. Une telle modification de ces paramètres de vol est susceptible d'être réalisée selon divers modes de commande.

Selon un mode manuel de commande, le pilote de l'aéronef à voilure tournante dispose de leviers de commande entraînés manuellement par ce pilote de l'aéronef pour opérer une variation de ces paramètres de vol et notamment des pas cyclique et/ou collectif des pales des différents rotors par l'intermédiaire de chaînes cinématiques de commande manuelle. La notion de manuelle est à considérer en opposition à la notion d'automatique, sans préjuger du moyen utilisé par l'homme pour manoeuvrer l'aéronef, palonnier, manette ou manche notamment.

Suivant une forme de réalisation d'un mode manuel de commande, les leviers de commande sont en prise sur des chaînes respectives à transmission mécanique distante d'efforts, permettant au pilote de l'aéronef à voilure tournante de manoeuvrer mécaniquement les pales à partir des leviers de commande, soit directement, soit par l'intermédiaire de servocommandes.

Suivant une autre forme de réalisation d'un mode manuel de commande, un entraînement d'un levier de commande par le pilote est générateur de signaux électriques d'activation d'au moins une servocommande de manoeuvre des pales.

Selon un mode automatisé de commande, un pilote automatique est générateur d'ordres de commande de ces paramètres de vol et notamment d'une variation du pas des pales des différents rotors par l'intermédiaire de chaînes cinématiques de commande automatisée. Lorsque le pilote automatique est activé, les ordres de commande se substituent aux ordres de commande générés par le pilote directement à partir des leviers de commande pour activer les servocommandes.

Le pilote automatique permet de maintenir une progression stable de l'aéronef à voilure tournante selon des consignes de vol préalablement mémorisées. Un état effectif de progression de l'aéronef est évalué par le pilote automatique à un instant donné au regard de diverses informations fournies par l'instrumentation de bord de l'aéronef. A partir d'une différence détectée par le pilote automatique entre les consignes de vol et l'état effectif de progression de l'aéronef, le pilote automatique intervient sur le comportement en vol de l'aéronef à voilure tournante par l'intermédiaire d'un ou plusieurs paramètres de vol pour rétablir son état effectif de progression conformément aux consignes de vol.

L'activation du pilote automatique est commandée par le pilote de l'aéronef à voilure tournante à partir d'un ou de plusieurs boutons de commande spécifiques.

Selon un mode de stabilisation mis en oeuvre par le pilote automatique, une consigne initiale de tenue d'assiette de l'aéronef à voilure tournante est par exemple définie au regard de l'état de progression de l'aéronef évalué à partir de l'activation du pilote automatique. Le mode de stabilisation procure une stabilisation de l'aéronef par correction d'assiette de l'aéronef au moyen du pilote automatique par rapport à la consigne initiale.

Selon un mode particulier de pilotage par transparence, le pilote peut éventuellement intervenir temporairement sur le comportement de l'aéronef par l'intermédiaire des leviers de commande, en surpassant les ordres de commande générés par le pilote automatique. Les consignes initiales de vol sont figées, une éventuelle intervention temporaire du pilote sur le comportement de l'aéronef n'induisant pas de modification des consignes initiales de vol.

Il est par ailleurs connu de corriger une consigne de vol telle une consigne de tenue d'assiette en fonction de l'état de progression effective de l'aéronef à voilure tournante à l'issue d'une action du pilote sur les leviers de commande. Il est encore connu de permettre au pilote de l'aéronef de corriger une consigne de tenue d'assiette en faisant varier la valeur de cette consigne par incrémentation, par l'intermédiaire d'un ou plusieurs organes de commande dédiés. Par exemple, deux organes de commande désignés généralement par le terme anglais « beep » sont utilisés. Par exemple, de tels organes de commande peuvent être positionnés respectivement sur un levier de commande de pas collectif généralement appelé « manche » et un levier de commande de pas cyclique.

Le document FR1347243 décrit un dispositif de pilotage par transparence permettant une action du pilote avec soit un retour aux consignes initiales de vol après arrêt de l'action du pilote et soit un enregistrement de nouvelles consignes de vol prenant en compte cette action du pilote.

On connaît également le document FR2991664 qui décrit un système automatisé d'assistance au pilotage permettant de tenir un paramètre de vol sur un axe de progression de l'aéronef tout en prenant en compte l'action du pilote de l'aéronef sur au moins un autre axe par l'intermédiaire de leviers de commande de vol lors du fonctionnement du pilote automatique de l'aéronef. Différents modes de guidage sont susceptibles d'être sélectionnés par le pilote privilégiant par exemple une tenue en vitesse verticale ou d'avancement ou bien une tenue de cap, d'incidence ou de pente.

Le document FR2756252 décrit un système de commande de vol pour un aéronef à voilure tournante permettant de réaliser une restitution simple et précise des marges de commande restantes sur les différents organes de commande manuels de l'aéronef. Ce système de commande de vol est destiné aux aéronefs munis de commandes de vol électriques ou bien optiques ainsi qu'aux aéronefs équipés d'un pilote automatique.

Par ailleurs, le document EP2597035 décrit un procédé de commande de vol pour un aéronef hybride comportant un rotor principal et au moins une hélice propulsive. Ce procédé permet de contrôler simultanément, à partir d'une commande de déplacement, par exemple longitudinal, le pas cyclique des pales du rotor principal et le pas collectif des pales de chaque hélice propulsive

De plus, le document US5001646 décrit un système de commande automatisé permettant au pilote d'agir sur la progression de l'aéronef par l'intermédiaire d'un organe de commande muni de quatre axes. Le pilote peut alors commander les accélérations longitudinale, latérale et verticale de l'aéronef ainsi que sa vitesse angulaire en lacet tout en conservant d'une part, à basse vitesse d'avancement, une vitesse par rapport au sol indépendamment du cap suivi et d'autre part, à grande vitesse d'avancement, un virage coordonné et une pente.

La stabilisation de l'aéronef à voilure tournante est procurée à partir de modes de base, selon lesquels le pilote automatique est par exemple générateur d'une augmentation de stabilité par amortissement des mouvements angulaires de l'aéronef, ou encore de tenue d'assiettes ou de cap. Les modes de base procurent un confort de pilotage pour le pilote de l'aéronef à voilure tournante, mais ne corrigent pas d'éventuels écarts par rapport à la vitesse ou la position de l'aéronef désirées par le pilote. Il a donc été proposé d'associer aux modes de base des modes supérieurs de fonctionnement pour annuler d'éventuels écarts de position, de vitesse et/ou d'accélération de l'aéronef par rapport aux valeurs désirées par le pilote. Ces valeurs désirées sont entrées sous forme de consignes de vol que les modes supérieurs du pilote automatique utilisent pour amener et maintenir l'aéronef sur la position, la vitesse et/ou l'accélération désirées. L'opération de stabilisation de l'aéronef procurée par les modes de base est effectuée rapidement par le pilote automatique, tandis que l'opération de rétablissement de la position, de la vitesse et/ou de l'accélération de l'aéronef à voilure tournante est ensuite effectuée plus lentement par les modes supérieurs.

On connait par exemple le document WO95/34029 qui décrit un système de commande de vol d'un aéronef permettant de stabiliser les vitesses de l'aéronef en contrôlant les commandes selon les axes de lacet, roulis et tangage ainsi que la portance tout en conservant un cap constant.

Le pilote automatique est encore susceptible de procurer des fonctions avancées d'assistance au guidage de l'aéronef à voilure tournante. Les potentialités offertes par les modes supérieurs sont accessoirement exploitées pour procurer une telle assistance. Les modalités d'exécution des fonctions avancées relèvent de fonctionnalités prédéfinies du pilote automatique, au regard d'une trajectoire de consigne que doit suivre l'aéronef.

De fait, le fonctionnement de tels modes supérieurs de pilotage automatique est conçu pour des opérations IFR désignant en langue anglaise « Instruments Flight Rules », c'est-à-dire pour un pilotage pouvant être effectué uniquement à l'aide des instruments de vol et pouvant alors être réalisé avec une vision extérieure de l'aéronef dégradée, voire aucune vision extérieure.

Par opposition, un pilotage à vue est réalisé selon des opérations VFR désignant en langue anglaise « Visual Flight Rules ». L'expression en langue anglaise « pilotage eyes-out » est également utilisée et signifie que le pilote effectue un pilotage de l'aéronef en regardant à l'extérieur de l'aéronef et non uniquement à l'aide des instruments et assistance de vol.

La trajectoire de consigne est par exemple exploitée au regard d'une mission de vol préalablement déterminée par le pilote de l'aéronef à voilure tournante ou bien en phase d'approche d'un site connu et repéré. Un tel site est notamment équipé de moyens procurant une interactivité entre le site et le pilote automatique, tels que des balises de radionavigation. En l'absence de tels équipements interactifs, le repérage du site est effectué par le pilote de l'aéronef en mode manuel, puis le pilote de l'aéronef active la fonction avancée souhaitée.

Les modalités de fonctionnement du pilote automatique permettent une assistance automatisée du pilotage en correction d'assiette de l'aéronef à voilure tournante en phase de vol de croisière, à vitesses d'avancement élevées et à une position de l'aéronef éloignée du sol. En phase de vol de croisière, l'environnement de l'aéronef est normalement dégagé et le pilote de l'aéronef est dispensé d'une intervention soutenue sur la manoeuvre de l'aéronef. Une telle dispense d'intervention soutenue est aussi susceptible d'être procurée à proximité du sol en environnement connu par la mise en oeuvre d'une fonction avancée du pilote automatique, tel que pour une phase d'approche d'une piste d'atterrissage connue et/ou équipée de moyens de repérage de son environnement.

De même, lors d'une phase d'approche d'un site d'intervention, y compris à basses vitesses, parfaitement connu, identifié et repéré par le pilote automatique, l'activation d'une fonction avancée est rendue possible pour guider l'aéronef à voilure tournante suivant la trajectoire de consigne correspondante.

En outre, le pilote automatique commande, comme un homme pilotant l'aéronef, traditionnellement les vitesses longitudinale, latérale et verticale de l'aéronef respectivement par le pas cyclique longitudinal, le pas cyclique latéral et le pas collectif du rotor principal, le pas collectif d'un rotor anticouple pilotant l'orientation de l'aéronef autour de son axe de lacet. Ces vitesses longitudinale, latérale et verticale sont définies dans un repère lié à l'aéronef dont les axes sont formés par les directions longitudinale, latérale et verticale de l'aéronef.

Par ailleurs, un pilote automatique peut également permettre à l'aéronef de réaliser des virages coordonnés. Un virage coordonné est un virage réalisé sans dérive de l'aéronef vis-à-vis de la trajectoire du virage par rapport au sol, il s'agit alors d'une coordination sol, ou bien sans facteur de charge latéral, il s'agit alors d'une coordination air.

Dans le cas d'une coordination sol, un virage est coordonné par rapport au sol. L'aéronef n'a pas de dérive vis-à-vis du sol, permet ainsi de suivre avec précision une trajectoire au sol. Un tel virage coordonné par rapport au sol est utilisé de préférence à faible vitesse et basse altitude afin de se déplacer en sécurité à proximité du relief ou de bâtiments, le nez de l'aéronef restant généralement aligné sur la trajectoire au sol.

Dans le cas d'une coordination air, un virage est coordonné par rapport à l'air. L'aéronef n'a pas de dérive vis-à-vis de l'air et privilégiant ainsi le confort des occupants et minimisant le dérapage de l'aéronef. Un tel virage coordonné par rapport à l'air est utilisé de préférence en vol de croisière, c'est-à-dire à haute vitesse et haute altitude et loin de tout obstacle.

On connait le document US5213283 qui décrit un système de commande permettant de réaliser un virage coordonné. Ce système de commande fournit automatiquement une commande de pilotage en lacet en réponse à une commande de pilotage en roulis du pilote de l'aéronef lors de la réalisation d'un tel virage coordonné, la charge du pilote étant ainsi réduite.

En outre, le document WO2012/134447 décrit un système de commande de vol d'un aéronef permettant de réaliser un virage coordonné dans l'ensemble du domaine de vol, en minimisant la charge de travail du pilote. Ce système de commande utilise à haute vitesse d'une part des changements d'inclinaison de l'aéronef pour piloter le cap ainsi qu'une accélération latérale et d'autre part la vitesse par rapport à l'air de l'aéronef pour piloter le cap, réalisant un virage coordonné par rapport à l'air. A basse vitesse, le système de commande utilise l'angle de dérapage de l'aéronef pour maintenir le cap aligné sur la trajectoire de l'aéronef, réalisant ainsi un virage coordonné par rapport au sol. Dans une zone de transition entre ces deux domaines de vol, l'angle de dérapage de l'aéronef et son accélération latérale sont utilisés pour maintenir l'aéronef en virage coordonné.

Par ailleurs, les aéronefs à voilures tournantes sont des aéronefs motorisés prévus pour pouvoir évoluer dans des conditions variées et parfois difficiles, tant au niveau des conditions atmosphériques, telles que la présence d'un vent violent et de conditions de visibilité variables, qu'au niveau des conditions de vol, telles qu'à basses vitesses ou en vol stationnaire, ou encore de l'environnement, tel que proches d'un quelconque sol inconnu ou mal connu.

Dans des conditions de vol difficiles, des facteurs inattendus sont susceptibles de devoir être pris en compte par le pilote de l'aéronef à voilure tournante. L'exploitation par le pilote de l'aéronef d'une assistance automatisée à la manoeuvre de l'aéronef dans de telles conditions de vol difficiles est donc délicate, voire impossible. Par exemple lorsque l'aéronef est proche du sol, une éventuelle modification de son comportement doit être rapidement opérée. Les modalités de fonctionnement du pilote automatique ne permettent que difficilement une modification rapide d'une trajectoire à suivre par l'aéronef au moyen de l'exploitation d'une fonction avancée mettant en oeuvre les modes supérieurs de fonctionnement du pilote automatique.

De fait, lors de telles conditions de vol difficiles, l'utilisation d'un pilotage IFR peut être dangereuse et un pilotage à vue est à privilégier, le pilote pouvant cependant utiliser certains instruments et/ou assistance de l'aéronef. On parle notamment de conditions de vol à vue en conditions VMC correspondant à l'acronyme désignant en langue anglaise « Visual Meteorological Conditions » ou en conditions de visibilité dégradée DVE correspondant à l'acronyme désignant en langue anglaise « Degraded Visual Environment ». Le pilote peut alors avoir besoin d'ajuster fréquemment la vitesse et/ou la trajectoire de l'aéronef afin d'éviter d'éventuels obstacles et de se rapprocher de ses objectifs, par exemple en cas de fort vent latéral.

Le document FR2777535 décrit un système de commande de vol d'un aéronef permettant notamment de contrôler la vitesse latérale par rapport au sol en gardant un cap constant afin de compenser par exemple un fort vent latéral. Ce système de commande permet également de maintenir la direction de la vitesse de l'aéronef, et donc sa trajectoire, constante lors d'une modification de son cap et/ou de sa vitesse longitudinale.

Par ailleurs, on connaît le document WO2012/134460 qui décrit un système de commande de vol d'un aéronef permettant de conserver une trajectoire constante par rapport au sol lors d'une rotation de cap à basse vitesse. Le système de commande agit sur les commandes en tangage et roulis afin de maintenir cette trajectoire, le pilote pouvant engager une rotation de l'aéronef à tout moment par l'intermédiaire de ces commandes.

De même, le document WO2012/096668 décrit un système de commande de vol d'un aéronef permettant de contrôler la vitesse verticale de l'aéronef, sa pente par rapport au sol et/ou une hauteur par rapport au sol selon sa vitesse d'avancement. En-dessous d'un seuil de vitesse d'avancement prédéterminé, correspondant à une situation de vol proche d'un vol stationnaire, le système de commande de vol permet de tenir une hauteur par rapport au sol. Au-dessus de ce seuil de vitesse d'avancement prédéterminé, le système de commande de vol permet alors de tenir une vitesse verticale de l'aéronef ou bien une pente par rapport au sol.

De plus, le document FR2814433 décrit un dispositif de commande de vol d'un aéronef dont une action sur un organe de commande peut avoir différents effets suivant la vitesse de translation de l'aéronef. Ainsi, si cette vitesse de translation de l'aéronef est inférieure ou égale à un seuil prédéterminé, une action sur cet organe de commande agit directement sur cette vitesse de translation. Par contre, si cette vitesse de translation de l'aéronef est supérieure à ce seuil prédéterminé, une action sur cet organe de commande agit par exemple, sur l'accélération en translation de l'aéronef ou bien sur sa vitesse angulaire.

Enfin, le document WO2013/012408 décrit un système de commande de vol d'un aéronef permettant de réaliser de façon automatique des mises en vol stationnaire de l'aéronef à partir d'un vol d'avancement ainsi qu'une tenue en position en vol stationnaire.

De plus, il est connu que, lors d'un vol d'un aéronef à voilure tournante avec une vitesse d'avancement non nulle, une action sur une commande de vol dans une seule direction entraîne la modification de plusieurs paramètres de vol et en particulier plusieurs paramètres de la trajectoire de vol de l'aéronef. Ce vol est effectué selon une trajectoire Tₛₒₗ par rapport au sol et est caractérisé par un angle de route sol TKₛₒₗ, une vitesse d'avancement Va, une pente P et un cap ψ.

Par exemple, une action longitudinale sur un levier de commande entraîne une modification du pas cyclique longitudinal des pales du rotor principal et, par suite, une modification d'au moins la vitesse d'avancement Va et la pente de l'aéronef. De plus, si le cap de l'aéronef est différent de son angle de route sol TKₛₒₗ, cet angle de route sol TKₛₒₗ est également modifié. Par ailleurs, si l'aéronef évolue avec une vitesse d'avancement Va élevée, l'angle de route sol TKₛₒₗ de l'aéronef peut également être modifié, que le cap de l'aéronef et l'angle de route sol TKₛₒₗ soient identiques ou bien différents.

De même, une action transversale sur un levier de commande entraîne une modification du pas cyclique latéral des pales du rotor principal et, par suite, une modification d'au moins l'angle de route sol TKₛₒₗ et la pente de l'aéronef.

Enfin, une action verticale sur un levier de commande entraîne une modification du pas collectif des pales du rotor principal et, par suite, une modification d'au moins la vitesse d'avancement Va et la pente de l'aéronef. De plus, si le cap de l'aéronef est différent de son angle de route, son angle de route sera également modifié.

En outre, il est également connu que pour modifier un seul de ces paramètres de la trajectoire de vol d'un aéronef lors d'un vol de croisière, il faut agir simultanément sur plusieurs directions des commandes de vol de l'aéronef.

Par exemple, pour modifier uniquement la vitesse d'avancement Va de l'aéronef sans changer sa pente et son angle de route sol TKₛₒₗ, le pilote de l'aéronef doit agir au moins sur le pas cyclique longitudinal des pales du rotor principal, selon la direction longitudinale, et le pas collectif des pales du rotor principal, selon la direction verticale. De plus, si le cap ψ de l'aéronef est différent de son angle de route sol TKₛₒₗ, le pilote doit agir également sur le pas cyclique latéral des pales du rotor principal, selon la direction transversale.

Il est ainsi difficile pour un pilote d'un aéronef à voilure tournante de modifier manuellement uniquement un seul paramètre de la trajectoire de vol de l'aéronef.

Par contre, lors d'un vol stationnaire d'un aéronef à voilure tournante, une action sur un seul organe de commande, tel que le levier de pas collectif ou le palonnier, peut entraîner une modification sur une seule caractéristique de vol de l'aéronef, par exemple respectivement sa vitesse verticale et son cap ψ.

La présente invention a alors pour objet un système de commande de vol ainsi qu'un procédé de commande de vol permettant de réaliser une tenue de trajectoire d'un aéronef à voilure tournante tout en s'affranchissant des limitations mentionnées ci-dessus, et permettant notamment au pilote de l'aéronef de modifier facilement, simplement et indépendamment chaque paramètre de la trajectoire de vol.

Selon l'invention, un système de commande de vol pour un aéronef à voilure tournante comporte au moins un organe de commande, muni conjointement de plusieurs axes de mobilité A,B,C,D, et un pilote automatique générateur d'ordres de commande selon des modes prédéfinis de fonctionnement et selon des consignes de vol.

L'aéronef vole en suivant une trajectoire Tₛₒₗ par rapport au sol avec un angle de route sol TKₛₒₗ, une vitesse d'avancement Va non nulle, une pente P et un cap ψ. L'aéronef est caractérisé par trois directions privilégiées, une direction longitudinale X s'étendant de l'arrière de l'aéronef vers l'avant de l'aéronef, une direction d'élévation Z s'étendant de bas en haut perpendiculairement à la direction longitudinale X et une direction transversale Y s'étendant de gauche à droite perpendiculairement aux directions longitudinale X et d'élévation Z.

La direction longitudinale X est l'axe de roulis de l'aéronef, la direction transversale Y est son axe de tangage et la direction d'élévation Z est son axe de lacet.

L'aéronef comporte au moins une voilure tournante, munie de plusieurs pales principales dont le pas collectif et le pas cyclique sont variables autour d'un axe de pas, permettant à l'aéronef d'effectuer des mouvements de rotation autour de ces directions X,Y,Z et de translation selon les directions X,Y,Z. Les ordres de commande du pilote automatique peuvent provoquer ces mouvements de l'aéronef en rotation et/ou en translation par rapport aux directions X,Y,Z.

Le système de commande de vol est remarquable en ce que, selon un mode de fonctionnement principal de ce système de commande de vol, au moins un organe de commande est mobile par rapport à un premier axe A de mobilité pour entraîner, indépendamment de la pente P et de l'angle de route sol TKₛₒₗ, une modification de la vitesse d'avancement Va par une première action par rapport à ce premier axe A de mobilité et par l'intermédiaire du pilote automatique. De même, cet au moins un organe de commande est mobile par rapport à un second axe B de mobilité pour entraîner, indépendamment de la pente P et de la vitesse d'avancement Va, une modification de l'angle de route sol TKₛₒₗ par une seconde action par rapport à ce second axe B de mobilité et par l'intermédiaire du pilote automatique et cet au moins un organe de commande est mobile par rapport à un troisième axe C de mobilité pour entraîner, indépendamment de l'angle de route sol TKₛₒₗ, et de la vitesse d'avancement Va, une modification de la pente P par une troisième action par rapport à ce troisième axe C de mobilité et par l'intermédiaire du pilote automatique.

L'aéronef à voilure tournante comportant au moins une voilure tournante à axe de rotation sensiblement vertical, c'est-à-dire parallèle à la direction d'élévation Z, peut être construit selon plusieurs architectures. L'aéronef comporte par exemple une seule voilure tournante formée par un rotor principal assurant la sustentation et la propulsion de l'aéronef ainsi qu'un rotor arrière anticouple à axe de rotation sensiblement horizontal, c'est-à-dire parallèle à la direction transversale Y. Ce rotor arrière anticouple permet également des manoeuvres autour de l'axe de lacet.

Selon un autre exemple, l'aéronef comporte deux voilures tournantes formées par deux rotors principaux contrarotatifs qui sont en tandem ou bien coaxiaux. L'aéronef peut également comporter au moins une voilure tournante, tel un rotor principal, assurant principalement la sustentation de l'aéronef et une ou plusieurs hélices propulsives à axes de rotation sensiblement horizontaux, c'est-à-dire parallèles à la direction longitudinale X assurant sa propulsion. Un tel aéronef constitue alors un hélicoptère hybride.

En outre, un aéronef à voilure tournante peut comporter des éléments aérodynamiques tels que des empennages ou bien des ailes dans le cas des hélicoptères hybrides notamment. Ces éléments aérodynamiques peuvent comporter des parties mobiles afin de faciliter la manoeuvrabilité de l'aéronef en particulier lors d'un vol de croisière.

Quelle que soit l'architecture de l'aéronef, le pilote de l'aéronef peut modifier le comportement en vol de l'aéronef en agissant sur un ou plusieurs leviers de commande provoquant une variation du pas cyclique et/ou du pas collectif des pales principales de chaque voilure tournante ainsi qu'un moyen de commande tel un palonnier provoquant une variation du pas collectif des pales secondaires d'un rotor arrière ou bien telle une manette provoquant une variation du pas collectif des pales secondaires d'au moins une hélice propulsive. De même, le pilote de l'aéronef peut également provoquer un déplacement des parties mobiles des éléments aérodynamiques éventuellement présents sur l'aéronef afin de modifier le comportement en vol de l'aéronef.

Ces variations de pas et ces déplacements de parties mobiles permettent de générer des rotations et/ou des translations de l'aéronef par rapport à ces directions X,Y,Z ou bien des variations de ses vitesses angulaires et/ou linéaires par rapport à ces mêmes directions X,Y,Z. Ces rotations et ces translations de l'aéronef se produisent selon un repère lié à l'aéronef et formé par les directions X,Y,Z.

Par contre, l'aéronef évolue généralement selon une trajectoire Tₛₒₗ déterminée par rapport au sol dans le but d'atteindre un objectif au sol tel qu'un terrain d'atterrissage. On considère que l'aéronef évolue selon une trajectoire Tₛₒₗ lorsque son centre de gravité suit cette trajectoire Tₛₒₗ. De fait, cette trajectoire Tₛₒₗ est définie dans un repère géographique terrestre, c'est-à-dire fixe par rapport au globe terrestre, dans lequel l'aéronef est mobile. Ce repère géographique terrestre est par exemple formé à partir des points cardinaux, par exemple par les directions du nord et de l'est ainsi que par une direction verticale telle que celle de la gravité terrestre.

Un vol d'un aéronef selon cette trajectoire Tₛₒₗ est ainsi caractérisé par un angle de route sol TKₛₒₗ pris par rapport à la direction du nord magnétique ou bien du nord géographique, dans un plan horizontal de ce repère géographique terrestre. L'aéronef évolue sur cette trajectoire Tₛₒₗ avec différents paramètres de cette trajectoire Tₛₒₗ qui sont cet angle de route sol TKₛₒₗ, une vitesse d'avancement Va, une pente P et un cap ψ. La vitesse d'avancement Va de l'aéronef est sa vitesse selon la direction de cette trajectoire Tₛₒₗ. La vitesse d'avancement Va peut être la vitesse d'avancement de l'aéronef par rapport au sol ou bien la vitesse d'avancement de l'aéronef par rapport à l'air.

La vitesse d'avancement de l'aéronef par rapport au sol est utilisée généralement comme vitesse d'avancement Va lors des vols à basses altitudes, c'est-à-dire l'aéronef étant proche d'obstacles tels que le relief et les bâtiments. La vitesse d'avancement de l'aéronef par rapport à l'air est quant à elle utilisée comme vitesse d'avancement Va essentiellement lors des vols de croisière à hautes altitudes, c'est-à-dire l'aéronef étant éloigné de tout obstacle.

La pente P de l'aéronef est l'angle formé par la direction de cette trajectoire Tₛₒₗ par rapport à une orientation horizontale du repère terrestre dans lequel est définie la trajectoire Tₛₒₗ, c'est-à-dire par rapport à un plan perpendiculaire à la direction verticale formée par la direction de la gravité terrestre.

Cependant, l'évolution de l'aéronef selon une pente P n'a de sens qu'à partir d'une certaine vitesse d'avancement de l'ordre de 20 noeuds (20 kt). De fait, lorsque la vitesse d'avancement de l'aéronef est inférieure à cette certaine vitesse d'avancement typiquement égale à 20kt, le pilotage de l'aéronef peut être réalisé en remplaçant la pente P par une vitesse verticale W_{z} de l'aéronef, cette vitesse verticale W_{z} étant selon la direction d'élévation Z.

De fait, une troisième action sur cet au moins un organe de commande par rapport à un troisième axe C de mobilité entraîne, indépendamment de l'angle de route sol TKₛₒₗ, et de la vitesse d'avancement Va, une modification de la vitesse verticale W_{z} de l'aéronef par l'intermédiaire du pilote automatique.

Le cap ψ de l'aéronef est l'angle formé par la projection dans le plan horizontal du repère terrestre de la direction longitudinale X de l'aéronef et la direction du nord. Ainsi, lorsque le cap ψ et l'angle de route sol TKₛₒₗ sont égaux, le nez de l'aéronef pointe sur la trajectoire Tₛₒₗ. De la sorte, la direction longitudinale X est alors alignée sur cette trajectoire Tₛₒₗ. Dans le cas contraire, le nez de l'aéronef ne se trouve pas sur cette trajectoire Tₛₒₗ et cette trajectoire Tₛₒₗ ne se trouve alors pas alignée sur la direction longitudinale X, un aéronef à voilure tournante ayant la particularité de pouvoir avancer dans toutes les directions indépendamment de sa direction longitudinale X.

De fait, lorsque le pilote veut modifier un ou plusieurs paramètres de la trajectoire Tₛₒₗ, il ne peut pas agir directement sur ces paramètres de la trajectoire Tₛₒₗ, mais doit généralement agir sur plusieurs paramètres de vol parmi les pas collectif et cyclique des pales principales d'au moins un rotor principal et éventuellement le pas collectif d'un rotor arrière ou d'au moins une hélice propulsives ou encore le déplacement d'au moins une partie mobile d'éléments aérodynamiques. En outre, il est quasiment impossible au pilote, en agissant manuellement sur les paramètres de vol, de modifier un seul de ces paramètres de la trajectoire Tₛₒₗ sans qu'au moins un autre paramètre de la trajectoire Tₛₒₗ soit modifié. De plus, suivant l'architecture de l'aéronef à voilure tournante, il est possible de modifier au moins un de ces paramètres de la trajectoire Tₛₒₗ en agissant indifféremment sur plusieurs paramètres de vol de l'aéronef.

Par exemple, on peut modifier la vitesse d'avancement Va d'un hélicoptère hybride en agissant soit sur les hélices propulsives, soit sur le rotor principal. Par contre, si le cap ψ de cet aéronef est différent de son angle de route sol TKₛₒₗ, l'action unique sur les hélices propulsives ou le rotor principal modifieront la vitesse d'avancement Va, mais également l'angle de route sol TKₛₒₗ.

En outre, un pilote peut avoir besoin d'ajuster fréquemment cette trajectoire Tₛₒₗ, notamment lors d'un vol à vue et à basse altitude, pour se rapprocher de ses objectifs en fonction de l'environnement et/ou des conditions climatiques. En effet, l'aéronef peut voler à proximité de bâtiments ou bien de reliefs et /ou être soumis à un vent fort, tel qu'un vent latéral, pouvant influer sur les manoeuvres du pilote.

Avantageusement, le système de commande de vol selon l'invention permet d'assurer une tenue de la trajectoire Tₛₒₗ en agissant directement et indépendamment sur ces paramètres de la trajectoire Tₛₒₗ par l'intermédiaire d'organes de commande et des axes de mobilité A,B,C,D de ces organes de commande. Les trois paramètres garantissant le suivi de cette trajectoire Tₛₒₗ de l'aéronef sont l'angle de route sol TKₛₒₗ, la vitesse d'avancement Va et la pente P ou bien la vitesse verticale W_{z} le cas échéant. Le cap ψ correspond à l'angle de lacet de l'aéronef entre la direction longitudinale X et le nord et peut être géré de façon indépendante de la trajectoire Tₛₒₗ, un aéronef à voilure tournante ayant la particularité de pouvoir avancer dans toutes les directions indépendamment de sa direction longitudinale X.

Ainsi, une action sur un organe de commande par rapport à trois des axes de mobilité A,B,C,D permet, par l'intermédiaire du pilote automatique qui agit sur les différents paramètres de vol, de modifier respectivement et indépendamment cet angle de route sol TKₛₒₗ, cette vitesse d'avancement Va et cette pente P ou bien cette vitesse verticale W_{z} le cas échéant. Une telle action par rapport à un de ces axes de mobilité A,B,C modifie alors les consignes de vol fournies au pilote automatique qui génère des ordres de commande afin de réaliser la demande du pilote. Dans ce but, le pilote automatique peut agir sur un ou plusieurs paramètres de vol de l'aéronef, tels que les pas collectif et cyclique des pales principales d'un rotor principal, le pas collectif des pales secondaires d'un rotor arrière ou bien d'au moins une hélice propulsive ou encore les déplacements des parties mobiles des éléments aérodynamiques éventuellement présents sur l'aéronef, pour obtenir cette modification d'un seul paramètre de la trajectoire Tₛₒₗ de l'aéronef.

De plus, une action du pilote par rapport à un quatrième axe de mobilité D par l'intermédiaire d'un organe de commande permet de modifier un paramètre de la trajectoire Tₛₒₗ de l'aéronef. Par exemple, le cap ψ peut être modifié par une action par rapport à ce quatrième axe de mobilité D.

Par ailleurs, ce cap ψ peut être modifié directement par le pilote de l'aéronef par une action sur les palonniers présents traditionnellement sur un aéronef, en modifiant par exemple le pas collectif d'un rotor arrière anticouple. Par suite, une action du pilote par rapport à un quatrième axe de mobilité D par l'intermédiaire d'un organe de commande peut permettre de modifier un autre paramètre de cette trajectoire Tₛₒₗ de l'aéronef. De préférence, une action du pilote par rapport à ce quatrième axe de mobilité D permet de modifier l'angle de route sol TKₛₒₗ, le pilote ayant ainsi deux possibilités pour modifier cet angle de route sol TKₛₒₗ par l'intermédiaire de deux axes de mobilité B,D.

Avantageusement, l'utilisation de ces deux axes de mobilité B,D pour agir sur le seul angle de route sol TKₛₒₗ permet au pilote de lui donner plus de souplesse pour modifier cet angle de route sol TKₛₒₗ par exemple par l'une ou l'autre de ces mains et de faciliter ainsi l'enchaînement de manoeuvres et/ou des changements de ces paramètres de la trajectoire Tₛₒₗ de l'aéronef.

Cependant, le cap ψ peut être modifié sans action directe du pilote sur ce cap ψ lorsque le pilote agit sur un organe de commande afin de modifier l'angle de route sol TKₛₒₗ ou bien la vitesse d'avancement Va.

Par exemple, lors de conditions de vol particulières, essentiellement en cas de fort vent, certains angles limites entre la direction longitudinale X et la trajectoire Tₛₒₗ peuvent conduire à un vol inconfortable pour les occupants voire dangereux. Notamment un alignement de la direction longitudinale X de l'aéronef et sa trajectoire Tₛₒₗ en cas de fort vent latéral peut conduire à un tel vol.

De fait, dans ces conditions de vol particulières, le cap ψ peut être modifié par le pilote automatique du système de commande de vol selon l'invention lors de variations de l'angle de route sol TKₛₒₗ ou bien de la vitesse d'avancement Va afin d'éviter d'atteindre de tels angles limites.

De même, une modification du cap ψ commandé par le pilote, par exemple par l'intermédiaire d'un palonnier de l'aéronef, peut conduire à une modification de l'angle de route sol TKₛₒₗ par le pilote automatique afin d'éviter d'atteindre ces angles limites.

Bien entendu, le pilote peut également agir simultanément sur plusieurs axes de mobilité A,B,C,D, le pilote automatique générant des ordres de commande afin de modifier les paramètres de la trajectoire Tₛₒₗ demandés par le pilote sans modification des autres paramètres de cette trajectoire Tₛₒₗ.

En outre, lors de ces actions du pilote sur les organes de commande et suite à ces actions, un ou plusieurs paramètres de la trajectoire Tₛₒₗ de l'aéronef sont modifiés afin de suivre une nouvelle trajectoire Tₛₒₗₙ. De nouvelles consignes de vol du pilote automatique sont alors alignées sur les paramètres de la nouvelle trajectoire Tₛₒₗₙ, c'est à dire un nouvel angle de route sol TKₛₒₗₙ, une nouvelle vitesse d'avancement Vaₙ, une nouvelle pente P ou bien une nouvelle vitesse verticale W_{zn} le cas échéant et/ou un nouveau cap ψₙ. Ainsi, le système de commande de vol selon l'invention permet au pilote de modifier la trajectoire Tₛₒₗ de l'aéronef en agissant directement sur les paramètres de la trajectoire Tₛₒₗ et de permettre au pilote automatique de suivre automatiquement la nouvelle trajectoire Tₛₒₗₙ choisie par le pilote.

On entend par alignement des consignes de vol sur les paramètres de la nouvelle trajectoire Tₛₒₗₙ le fait que les consignes de vol initiales sont modifiées pour prendre des valeurs correspondant à cette nouvelle trajectoire Tₛₒₗₙ.

Un aéronef à voilure tournante comporte généralement au moins un premier levier de commande permettant de modifier le pas cyclique d'un rotor principal et un second levier de commande permettant de modifier le pas collectif de ce rotor principal. Ce premier levier de commande comporte deux axes de mobilité et permet de commander simultanément des mouvements de rotation de l'aéronef autour des directions longitudinale X et transversale Y. Le second levier de commande comporte un seul axe de mobilité et permet de commander des mouvements de translation de l'aéronef selon la direction d'élévation Z.

De plus, un tel aéronef à voilure tournante comporte généralement un palonnier permettant de piloter un dispositif anticouple, par exemple en modifiant le pas collectif d'un rotor arrière anticouple, et de piloter ainsi l'angle de lacet de l'aéronef, et par suite son cap ψ. Un tel aéronef peut également disposer, lorsqu'il comporte des éléments aérodynamiques munis de parties mobiles, de moyens de commande permettant de piloter le déplacement de ces parties mobiles. Le déplacement de ces parties mobiles peut également être couplé aux premier et second leviers.

Le système de commande de vol selon l'invention comporte ainsi deux leviers de commande formant alors conjointement trois axes de mobilité.

Selon un premier mode de fonctionnement secondaire de ce système de commande de vol selon l'invention, le premier organe de commande est le premier levier de commande et le second organe de commande est le second levier de commande, le premier organe de commande comportant le premier axe A de mobilité et le second axe B de mobilité, le second organe de commande comportant le troisième axe C de mobilité. Ces premier et second leviers permettent ainsi le pilotage de l'aéronef en tenue de trajectoire selon la trajectoire Tₛₒₗ par l'intermédiaire du pilote automatique.

Une action sur le premier levier de commande par rapport au premier axe de mobilité A permet alors de modifier la vitesse d'avancement Va de l'aéronef sur la trajectoire Tₛₒₗ par l'intermédiaire du pilote automatique. De même, une action sur ce premier levier de commande par rapport au second axe de mobilité B permet de modifier l'angle de route sol TKₛₒₗ par l'intermédiaire du pilote automatique. Enfin, une action sur le second levier de commande par rapport au troisième axe de mobilité C permet de modifier la pente P de l'aéronef ou bien sa vitesse verticale W_{z} le cas échéant par l'intermédiaire du pilote automatique.

De la sorte, l'aéronef comporte des premier et second leviers de commande qui peuvent être les organes de commande formant conjointement trois axes de mobilité A,B,C selon le mode de fonctionnement du système de commande de vol selon l'invention.

Cependant, ce premier mode de fonctionnement secondaire du système de commande selon l'invention n'est pas adapté pour une manoeuvre soudaine de l'aéronef afin par exemple d'éviter un obstacle se trouvant sur la trajectoire Tₛₒₗ ou bien à proximité de celle-ci. En effet, les premier et second leviers de commande permettent, dans ce premier mode de fonctionnement secondaire du système de commande, de piloter en tenue de trajectoire, c'est-à-dire modifier les paramètres de vol afin de suivre la trajectoire Tₛₒₗ avec l'aide du pilote automatique. Les premier et second leviers de commande ne permettent donc pas de réaliser rapidement un déplacement vertical ou latéral de l'aéronef.

Une manoeuvre soudaine d'évitement d'obstacle est généralement effectuée uniquement par une rotation autour de l'axe de tangage, c'est-à-dire par l'intermédiaire du premier levier de commande, afin de réaliser un déplacement vertical. Mais cette manoeuvre autour de l'axe de tangage, obtenue par une variation du pas cyclique longitudinal, peut être accompagnée d'une action du pilote sur le second levier de commande entraînant alors également une variation du pas collectif.

De fait, lors de ce premier mode de fonctionnement secondaire du système de commande selon l'invention, une action brutale du pilote sur au moins un des premier et second leviers de commande, et de préférence uniquement le premier levier de commande, entraîne une désactivation de ce premier mode de fonctionnement secondaire du système de commande. Le système de commande selon l'invention peut alors basculer sur un autre mode de fonctionnement, de préférence vers un mode de fonctionnement de pilotage par transparence ou bien un mode de fonctionnement manuel.

Par exemple, suite à la détection d'une telle action brutale du pilote et au basculement vers un mode de fonctionnement de pilotage par transparence, ce pilote peut commander par transparence le tangage de l'aéronef par l'intermédiaire du premier levier de commande afin de provoquer des mouvements de rotation de l'aéronef autour de la direction transversale Y. La pente P ou bien la vitesse verticale W_{z} le cas échéant n'est alors plus considérée comme une consigne de vol et donc non pilotée par le pilote automatique afin de ne pas s'opposer à la manoeuvre d'évitement. De plus, le pas collectif reste constant sauf action par transparence du pilote sur le second levier de commande afin de provoquer des mouvements de translation de l'aéronef selon la direction d'élévation Z.

On entend par action brutale une action de grande amplitude du pilote de l'aéronef sur un des deux leviers de commande. En effet, une telle action de grande amplitude peut être considérée comme une demande d'évitement d'un obstacle de la part du pilote, le pilotage en tenue de trajectoire étant réalisé par des mouvements de faible amplitude afin d'obtenir des modifications de la trajectoire Tₛₒₗ.

Par ailleurs, le système de commande de vol selon l'invention peut comporter des organes de commande dédiés au pilotage de l'aéronef en tenue de trajectoire selon la trajectoire Tₛₒₗ par l'intermédiaire du pilote automatique.

Le système de commande de vol selon l'invention peut par exemple comporter un premier organe de commande positionné sur le premier levier de commande et un second organe de commande positionné sur le second levier de commande. Le premier organe de commande comporte le premier axe A de mobilité et le second axe B de mobilité alors que le second organe de commande comporte le troisième axe C de mobilité et éventuellement le quatrième axe D de mobilité.

Le système de commande de vol comporte ainsi deux organes de commande formant conjointement au moins trois axes de mobilité A,B,C, voire quatre axes de mobilité A,B,C,D. Un premier organe de commande est muni de deux axes de mobilité A,B et un second organe de commande est muni d'un ou deux axes de mobilité C,D.

Selon un second mode de fonctionnement secondaire de ce système de commande de vol selon l'invention, les organes de commande permettent de piloter directement les mouvements de rotation de l'aéronef autour des directions longitudinale X et transversale Y ainsi que les mouvements de translation de l'aéronef selon la direction d'élévation Z.

Un premier organe de commande pilote par exemple les mouvements de rotation de l'aéronef autour des directions longitudinale X et transversale Y par l'intermédiaire du pilote automatique et un second organe de commande pilote les mouvements de translation de l'aéronef selon la direction d'élévation Z par l'intermédiaire du pilote automatique.

De tels organes de commande sont généralement calibrés et commandent ainsi des mouvements de l'aéronef précis et prédéterminés. Ainsi, lorsque le pilote agit sur un des organes de commande en exerçant une impulsion ou bien un appui long par rapport à un axe de mobilité A,B,C,D, une variation d'un des paramètres de la trajectoire Tₛₒₗ d'une valeur prédéterminée est réalisée. De tels organes de commande sont souvent désignés par le terme en langue anglaise « beeps ».

Par exemple, en mode de fonctionnement principal du système de commande selon l'invention, lors d'un appui long sur un organe de commande par rapport à l'axe de mobilité A, l'aéronef accélère ou décélère de 1.5 noeuds par seconde (1.5kts/s) sur la trajectoire Tₛₒₗ tant que cet appui long est maintenu. Puis lorsque cet organe de commande est relâché par le pilote par rapport à l'axe de mobilité A, le pilote automatique aligne ses consignes de vol sur la nouvelle vitesse d'avancement Vaₙ de l'aéronef.

De même, lors d'un appui long sur un organe de commande par rapport à l'axe de mobilité B ou bien D, l'angle de route sol TKₛₒₗ de l'aéronef varie au rythme de typiquement 3 degrés par seconde (3°/s) tant que cet appui long est maintenu. Puis, lorsque cet organe de commande est relâché par le pilote par rapport à l'axe de mobilité B ou D, le pilote automatique aligne ses consignes de vol sur le nouvel angle de route sol TKₛₒₗₙ de l'aéronef pour suivre une nouvelle trajectoire Tₛₒₗₙ.

Enfin, suite à une impulsion sur un organe de commande par rapport à l'axe de mobilité C, la pente P de l'aéronef varie d'une valeur de 0.1% de pente à chaque impulsion et cette pente P varie avec une vitesse de 0.3% de pente par seconde (0.3%/s) lors d'un appui long sur cet organe de commande tant que cet appui long est maintenu. Puis, suite à chaque impulsion ou bien lorsque cet organe de commande est relâché par le pilote par rapport à l'axe de mobilité C, le pilote automatique aligne ses consignes de vol sur la nouvelle pente Pₙ de l'aéronef.

Cependant, en dessous d'une certaine vitesse d'avancement, l'évolution de l'aéronef selon une pente P n'ayant pas de sens, le pilotage de l'aéronef peut être réalisé selon sa vitesse verticale W_{z}. Dès lors, une action sur un organe de commande par rapport à l'axe de mobilité C modifie la vitesse verticale W_{z} de l'aéronef. De fait, lors d'un appui long sur un organe de commande par rapport à l'axe de mobilité C, l'aéronef volant à une vitesse d'avancement inférieure à cette certaine vitesse d'avancement, l'aéronef accélère ou décélère verticalement par exemple de 150 pieds par minute (150 ft/mn) tant que cet appui long est maintenu. Puis, lorsque cet organe de commande est relâché par le pilote par rapport à l'axe de mobilité C, le pilote automatique aligne généralement ses consignes de vol sur la nouvelle vitesse verticale W_{Zn}.

La présente invention a également pour objet un procédé de commande de vol pour un aéronef à voilure tournante, l'aéronef volant en suivant une trajectoire Tₛₒₗ par rapport au sol avec un angle de route sol TKₛₒₗ, une vitesse d'avancement Va, une pente P et un cap ψ.

Cet aéronef comporte trois directions privilégiées, une direction longitudinale X s'étendant de l'arrière de l'aéronef vers l'avant de l'aéronef, une direction d'élévation Z s'étendant de bas en haut perpendiculairement à la direction longitudinale X et une direction transversale Y s'étendant de gauche à droite perpendiculairement aux directions longitudinale X et d'élévation Z.

L'aéronef comporte au moins une voilure tournante, munie de plusieurs pales principales dont le pas collectif et le pas cyclique sont variables autour d'un axe de pas et un pilote automatique générateur d'ordres de commande selon des modes prédéfinis de fonctionnement et selon des consignes de vol. L'aéronef peut alors effectuer des mouvements de rotation autour de ces directions X,Y,Z et de translation selon les directions X,Y,Z, les ordres de commande du pilote automatique pouvant provoquer ces mouvements de l'aéronef en rotation et/ou en translation par rapport aux directions X,Y,Z.

L'aéronef comporte également un système de commande de vol comportant au moins un organe de commande muni conjointement de plusieurs axes de mobilité A,B,C,D.

Ce procédé de commande de vol pour un aéronef à voilure tournante permet une tenue de trajectoire et comporte plusieurs étapes au cours desquelles :
- on commande une modification de la vitesse d'avancement Va par une première action par rapport à un premier axe A de mobilité d'un premier organe de commande et par l'intermédiaire du pilote automatique,
- on commande une modification de l'angle de route sol TKₛₒₗ par une seconde action par rapport à un second axe B de mobilité du premier organe de commande et par l'intermédiaire du pilote automatique, et
- on commande une modification de la pente P ou bien de la vitesse verticale W_{z} le cas échéant par une troisième action par rapport à un troisième axe C de mobilité d'un deuxième organe de commande et par l'intermédiaire du pilote automatique.

Le procédé de commande de vol selon l'invention permet également de commander une modification de l'angle de route sol TKₛₒₗ par rapport au sol de l'aéronef par une quatrième action par rapport à un quatrième axe D de mobilité d'un organe de commande et par l'intermédiaire du pilote automatique.

De fait, lors de ces actions du pilote sur les organes de commande et suite à ces actions, un ou plusieurs paramètres de cette trajectoire Tₛₒₗ de l'aéronef sont modifiés afin de suivre une nouvelle trajectoire Tₛₒₗ De nouvelles consignes de vol du pilote automatique sont alors alignées sur les paramètres de la nouvelle trajectoire Tₛₒₗ, c'est à dire un nouvel angle de route sol TKₛₒₗ, une nouvelle vitesse d'avancement Va, une nouvelle pente P ou bien une nouvelle vitesse verticale W_{z} le cas échéant et/ou un nouveau cap ψ. Ainsi, le procédé de commande de vol selon l'invention permet au pilote de modifier la trajectoire Tₛₒₗ de l'aéronef en agissant directement sur les paramètres de cette trajectoire Tₛₒₗ et de permettre au pilote automatique de suivre la nouvelle trajectoire Tₛₒₗ choisie par le pilote.

En outre, le système de commande de vol de l'aéronef comporte deux organes de commande formant conjointement au moins trois axes de mobilité A,B,C, voire quatre axes de mobilité A,B,C,D. Par exemple, le système de commande de vol comporte deux organes de commande, un premier organe de commande muni de deux axes de mobilité A,B et un second organe de commande muni d'un ou deux axes de mobilité C,D.

Par ailleurs, le système de commande de vol de l'aéronef peut comporter un premier levier de commande permettant de modifier le pas cyclique des pales principales d'un rotor principal et un second levier de commande permettant de modifier le pas collectif des pales principales de ce rotor principal. Ce premier levier de commande comporte deux axes de mobilité et permet notamment de commander des mouvements de rotation de l'aéronef autour des directions longitudinale X et transversale Y. Le second levier de commande comporte un seul axe de mobilité et permet notamment de commander des mouvements de translation de l'aéronef selon la direction d'élévation Z.

Selon un premier mode de fonctionnement secondaire du procédé de commande de vol selon l'invention, le premier organe de commande est le premier levier de commande et le second organe de commande est le second levier de commande, le premier organe de commande comportant le premier axe A de mobilité et le second axe B de mobilité, le second organe de commande comportant le troisième axe C de mobilité.

Selon un second mode de fonctionnement secondaire du procédé de commande de vol selon l'invention, on peut commander directement les mouvements de rotation de l'aéronef autour des directions longitudinale X et transversale Y ainsi que les mouvements de translation de l'aéronef selon la direction d'élévation Z par l'intermédiaire d'au moins un des organes de commande, avec ou sans l'assistance du pilote automatique.

L'invention et ses avantages apparaîtront avec plus de détails dans le cadre de la description qui suit avec des exemples de réalisation donnés à titre illustratif en référence aux figures annexées qui représentent :
- la figure 1, un aéronef équipé de commandes de vol selon l'invention,
- la figure 2, un schéma synoptique d'un procédé de commande de vol selon l'invention,
- les figures 3 et 4, deux vues de détail de leviers de commande d'un aéronef à voilure tournante, et
- la figure 5, un schéma représentant l'angle de route sol et le cap de l'aéronef.

Les éléments présents dans plusieurs figures distinctes sont affectés d'une seule et même référence.

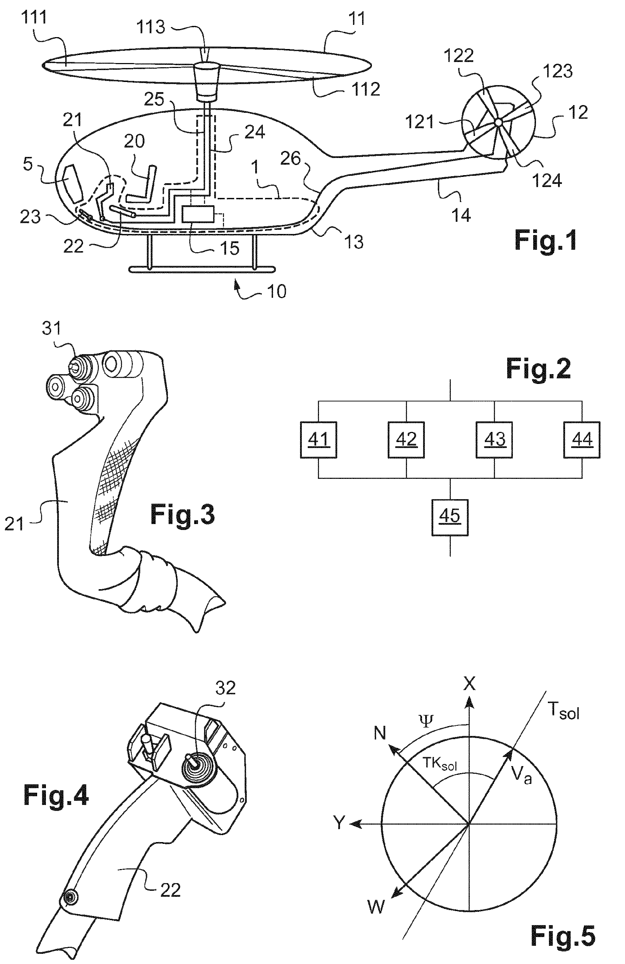

Sur la figure 1, un aéronef 10 est représenté, cet aéronef 10 comprenant un rotor principal 11 positionné au-dessus d'un fuselage 13 et un rotor arrière anticouple 12 positionné à l'extrémité arrière d'une poutre de queue 14. L'aéronef 10 comporte également un tableau de bord 5, un siège 20 sur lequel peut s'asseoir un pilote de l'aéronef 10, un pilote automatique 15 et des moyens de commande manuels, composés notamment de deux leviers de commande 21,22 et d'un palonnier 23.

De plus, un repère X,Y,Z est attaché à cet aéronef 10, et plus particulièrement à son centre de gravité. La direction longitudinale X s'étend de l'arrière de l'aéronef 10 vers l'avant de l'aéronef 10, la direction d'élévation Z s'étend de bas en haut perpendiculairement à la direction longitudinale X, la direction transversale Y s'étendant de gauche à droite perpendiculairement aux directions longitudinale X et d'élévation Z.

La direction longitudinale X est l'axe de roulis de l'aéronef 10, la direction transversale Y est son axe de tangage et la direction d'élévation Z est son axe de lacet.

Le rotor principal 11 est à axe de rotation sensiblement vertical, c'est-à-dire parallèle à la direction d'élévation Z, et est muni de trois pales principales 111,112,113 dont les pas collectif et cyclique sont variables et pilotables par l'intermédiaires des leviers de commande 21,22 et du pilote automatique 15. De même, le rotor arrière 12 est à axe de rotation sensiblement horizontal, c'est-à-dire parallèle à la direction transversale Y, et est muni de quatre pales secondaires 121,122,123,124 dont le pas collectif est variable et pilotable par l'intermédiaire du palonnier 23 et du pilote automatique 15.

Plus précisément, le premier levier de commande 21 est mobile autour des directions longitudinale et transversale X,Y et pilote le pas cyclique des pales principales 111,112,113 par l'intermédiaire d'une première chaîne cinématique de commande 24. Le second levier de commande 22 est quant à lui mobile autour de la direction transversale Y et pilote le pas collectif des pales principales 111,112,113 par l'intermédiaire d'une seconde chaîne cinématique de commande 25. De fait, une action sur ce premier levier de commande 21 permet alors de commander des mouvements de rotation de l'aéronef 10 autour des directions longitudinale X et transversale Y et une action sur ce second levier de commande permet alors de commander des mouvements de translation de l'aéronef 10 selon la direction d'élévation Z.

De même, le palonnier 23 pilote le pas collectif des pales secondaires 121,122,123,124 par l'intermédiaire d'une troisième chaîne cinématique de commande 26. De fait, une action sur ce palonnier 23 permet alors de commander des mouvements de rotation de l'aéronef 10 autour de son axe de lacet.

Ces chaînes cinématiques de commande 24,25,26 permettant d'actionner les différentes pales et peuvent être par exemple composées par des liaisons totalement mécaniques entre les moyens de commande manuels 21,22,23 et les pales. Ces chaînes cinématiques de commande 24,25,26 peuvent également être composées par des liaisons mécaniques associées à des moyens d'action hydrauliques ou bien des liaisons électriques associées à de tels moyens d'action hydrauliques.

En outre, le pilote automatique 15 permet de piloter les pas collectif et cyclique des pales principales 111,112,113 ainsi que le pas collectif des pales secondaires 121,122,123,124 en agissant respectivement sur ces chaînes cinématiques de commande 24,25,26. De fait, le pilote automatique 15 permet alors de commander des mouvements de rotation de l'aéronef 10 autour des directions longitudinale X et transversale Y et des mouvements de translation de l'aéronef 10 selon la direction d'élévation Z ainsi que des mouvements de rotation de l'aéronef 10 autour de son axe de lacet.

Les figures 3 et 4 représentent plus en détail la zone de préhension respectivement des premier et second leviers de commande 21,22. La zone de préhension de chaque levier de commande 21,22 comporte notamment un organe de commande 31,32. Chaque organe de commande 31,32 est mobile autour de deux axes de mobilité spécifiques A,B,C,D. Un premier organe de commande 31 présent sur le premier levier de commande 21 et représenté sur la figure 3 est mobile autour des deux axes de mobilité A,B. De même, un second organe de commande 32 présent sur le second levier de commande 22 et représenté sur la figure 4 est mobile autour des deux axes de mobilité C,D.

Un système de commande de vol 1 est formé par les moyens de commande manuels 21,22,23, les organes de commande 31,32, le pilote automatique 15 et les chaînes cinématiques de commande 24,25,26.

L'aéronef 10 peut voler en suivant une trajectoire Tₛₒₗ par rapport au sol, cette trajectoire Tₛₒₗ étant déterminée par rapport au sol et définie dans un repère géographique terrestre, par exemple déterminé par les points cardinaux et la direction de la gravité terrestre.

Un vol d'un aéronef selon la trajectoire Tₛₒₗ, est caractérisé par différents paramètres de cette trajectoire Tₛₒₗ, un angle de route sol TKₛₒₗ entre la direction de la trajectoire Tₛₒₗ et la direction du nord dans un plan horizontal de ce repère géographique terrestre, une vitesse d'avancement Va de l'aéronef 10, une pente P formée par l'angle entre la direction de cette trajectoire Tₛₒₗ et l'orientation horizontale du repère terrestre et un cap ψ qui est l'angle formé par la projection dans un plan horizontal du repère terrestre de la direction longitudinale X de l'aéronef 10 et la direction du nord.

La vitesse d'avancement Va de l'aéronef 10 est la vitesse de l'aéronef 10 selon la direction de cette trajectoire Tₛₒₗ, cette vitesse pouvant être définie par rapport au sol ou bien par rapport à l'air.

La figure 5 représente une projection sur un plan horizontal de ce repère terrestre d'une trajectoire Tₛₒₗ. Les directions longitudinale et transversale X,Y de l'aéronef 10 sont également représentées ainsi que les directions N,W du repère géographique terrestre.

Le cap ψ est ainsi représenté entre la direction longitudinale X de l'aéronef 10 et la direction N du nord. L'angle de route sol TKₛₒₗ est représenté entre la direction de la trajectoire Tₛₒₗ et la direction N du nord.

On constate que le cap ψ est différent de l'angle de route sol TKₛₒₗ. Par suite, le nez et la poutre de queue 14 de l'aéronef 10 étant alignés sur la direction longitudinale X ne sont alors pas alignés avec la trajectoire Tₛₒₗ. De même, la vitesse d'avancement Va est alignée sur la trajectoire Tₛₒₗ et n'est pas parallèle à la direction longitudinale X.

L'aéronef 10 évolue généralement selon une trajectoire Tₛₒₗ afin d'atteindre un objectif au sol tel qu'un terrain d'atterrissage. Cependant, le pilote peut avoir besoin de modifier un ou plusieurs paramètres de cette trajectoire Tₛₒₗ, pour par exemple ralentir, éviter un obstacle non répertorié dans une base de données de l'aéronef 10 ou bien simplement changer de route. De telles modifications sont notamment nécessaires lors d'un vol à vue et à basse altitude et en fonction de l'environnement et/ou des conditions climatiques.

Pour modifier au moins un des paramètres de la trajectoire Tₛₒₗ, le pilote doit généralement agir en pilotant essentiellement une ou plusieurs variations des pas des pales principales 111,112,113 du rotor principal 11 et éventuellement des variations des pas des pales secondaires 121,122,123,124 du rotor arrière 12. Cependant, il est quasiment impossible au pilote, en agissant manuellement sur au moins un des moyens de commande 21,22,23 de modifier un seul des paramètres de la trajectoire Tₛₒₗ.

La figure 2 représente un mode de fonctionnement d'un procédé de commande de vol en tenue de trajectoire pour un aéronef 10 à voilure tournante permettant au pilote de commander directement une modification d'un ou plusieurs paramètres de la trajectoire Tₛₒₗ. Ce procédé de commande de vol en tenue de trajectoire permet ainsi d'assurer une tenue de la trajectoire Tₛₒₗ en agissant directement et indépendamment sur ces paramètres de la trajectoire Tₛₒₗ par l'intermédiaire d'organes de commande 31,32.

En effet, chaque action sur un organe de commande 31,32 permet par l'intermédiaire du pilote automatique 15, qui agit sur les différents paramètres de vol, de modifier respectivement et indépendamment un ou plusieurs paramètres de la trajectoire Tₛₒₗ.

Le système de commande de vol 1 permet de mettre en oeuvre ce procédé de commande de vol en tenue de trajectoire.

Ainsi, au cours d'une première étape 41, on commande une modification de la vitesse d'avancement Va de l'aéronef 10 par une première action sur le premier organe de commande 31 par rapport à un premier axe A de mobilité et par l'intermédiaire du pilote automatique 15.

Au cours d'une seconde étape 42, on commande une modification de l'angle de route sol TKₛₒₗ par une seconde action sur le premier organe de commande 31 par rapport à un second axe B de mobilité et par l'intermédiaire du pilote automatique 15.

Ainsi, au cours d'une troisième étape 43, on commande une modification de la pente P par une troisième action sur le second organe de commande 32 par rapport à un troisième axe C de mobilité et par l'intermédiaire du pilote automatique 15.

Ainsi, au cours d'une quatrième étape 44, on commande une modification de l'angle de route sol TKₛₒₗ par une quatrième action sur le second organe de commande 32 par rapport à un quatrième axe D de mobilité et par l'intermédiaire du pilote automatique 15.

Bien entendu, le pilote peut également agir simultanément sur un seul ou les deux organes de commande 31,32 et par rapport à plusieurs axes de mobilité A,B,C,D, les étapes 41,42,43,44 pouvant être réalisées simultanément. Le pilote automatique 15 génère alors des ordres de commande afin de modifier les paramètres de la trajectoire Tₛₒₗ demandées par le pilote sans modification des autres paramètres de cette trajectoire Tₛₒₗ.

En outre, lors de ces actions du pilote sur les organes de commande 31,32 et suite à ces actions, un ou plusieurs paramètres de la trajectoire Tₛₒₗ de l'aéronef 10 sont modifiés afin de suivre une nouvelle trajectoire Tₛₒₗ. Par suite, au cours d'une cinquième étape 45, de nouvelles consignes de vol du pilote automatique 15 sont alignées sur les paramètres de la nouvelle trajectoire Tₛₒₗₙ, c'est à dire un nouvel angle de route sol TKₛₒₗ, une nouvelle vitesse d'avancement Vaₙ, une nouvelle pente Pₙ et/ou un nouveau cap ψₙ.

Par ailleurs, le procédé de commande de vol en tenue de trajectoire selon l'invention possède deux modes de fonctionnement secondaires.

Selon un premier mode de fonctionnement secondaire de ce procédé de commande de vol selon l'invention, le premier levier de commande 21 est utilisé en tant que premier organe de commande 31 et le second levier de commande 22 est utilisé en tant que second organe de commande 32. De fait, le premier levier de commande 21 permet de modifier la vitesse d'avancement Va de l'aéronef sur la trajectoire Tₛₒₗ lors d'un mouvement autour de la direction transversale Y qui correspond alors au premier axe A de mobilité et de modifier l'angle de route sol TKₛₒₗ lors d'un mouvement autour de la direction longitudinale X qui correspond alors au second axe B de mobilité.

De même, le second levier de commande 22 permet de modifier la pente P de l'aéronef 10 lors d'un mouvement autour de la direction transversale Y qui correspond alors au troisième axe C de mobilité. Ces premier et second leviers 21,22 permettent ainsi le pilotage de l'aéronef 10 en tenue de trajectoire selon la trajectoire Tₛₒₗ par l'intermédiaire du pilote automatique 15. Ce premier mode de fonctionnement secondaire est possible lorsque les chaînes cinématiques 24,25,26 sont formées par exemple de liaisons électriques.

Cependant, ce premier mode de fonctionnement secondaire n'est pas adapté si le pilote doit réaliser de façon urgente une manoeuvre soudaine de l'aéronef 10 afin par exemple d'éviter un obstacle se trouvant sur la trajectoire Tₛₒₗ ou bien à proximité de celle-ci. En effet, les premier et second leviers de commande 21,22 ne permettent pas de réaliser rapidement un déplacement vertical ou latéral de l'aéronef selon ce premier mode de fonctionnement secondaire.

De fait, ce premier mode de fonctionnement secondaire est désactivé dès qu'une action brutale du pilote sur le premier levier de commande 21 est détectée. Par suite, les premier et second leviers de commande 21,22 fonctionnent selon un mode de fonctionnement de pilotage par transparence ou bien un mode de fonctionnement manuel et permettent alors au pilote de réaliser la manoeuvre d'évitement nécessaire.

Selon un second mode de fonctionnement secondaire de ce procédé de commande de vol selon l'invention, les organes de commande 31,32 peuvent être utilisés respectivement selon le fonctionnement en mode manuel des premier et second leviers 21,22. Les organes de commande 31,32 permettent ainsi de piloter respectivement et directement les variations de pas cyclique et collectif des pales 111, 112, 113 du rotor principal 11.

Le premier organe de commande 31 pilote alors les mouvements de rotation de l'aéronef 10 autour des directions longitudinale X et transversale Y par l'intermédiaire du pilote automatique 15 et le second organe de commande 32 pilote les mouvements de translation de l'aéronef 10 selon la direction d'élévation Z par l'intermédiaire du pilote automatique 15.

En outre, l'évolution de l'aéronef 10 selon une pente P n'a de sens qu'à partir d'une certaine vitesse d'avancement de l'ordre de 20 kt. De fait, lorsque la vitesse d'avancement de l'aéronef 10 est inférieure à cette certaine vitesse d'avancement, le pilotage de l'aéronef 10 peut être réalisé en remplaçant la pente P par une vitesse verticale W_{z} de l'aéronef 10.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, l'aéronef 10 équipé de ce système de commande de vol 1 n'est pas limité à l'aéronef 10 représenté sur la figure 1. Cet aéronef 10 peut par exemple comporter deux rotors principaux ou bien être un hélicoptère hybride.

De plus, le nombre de pales principales 111,112,113 d'un rotor principal 11 ainsi que le nombre de pales secondaires 121,122,123,124 d'un rotor arrière 12 ne sont pas limités à l'exemple d'aéronef 10 représenté sur la figure 1. Un rotor principal 11 ou un rotor arrière 12 peut en effet comporter deux, trois, quatre, cinq pales, voire plus de cinq pales.

## Revendications

1. Système de commande de vol (1) pour aéronef à voilure tournante (10), ledit aéronef (10) volant en suivant une trajectoire Tₛₒₗ par rapport au sol avec un angle de route sol TKₛₒₗ, une vitesse d'avancement Va, une pente P et un cap ψ, une direction longitudinale X s'étendant de l'arrière dudit aéronef (10) vers l'avant dudit aéronef (10), une direction d'élévation Z s'étendant de bas en haut perpendiculairement à ladite direction longitudinale X et une direction transversale Y s'étendant de gauche à droite perpendiculairement auxdites directions longitudinale X et d'élévation Z,
- ledit aéronef (10) comportant au moins une voilure tournante (11) munie de plusieurs pales principales dont le pas collectif et le pas cyclique sont variables autour d'un axe de pas, ledit aéronef (10) étant capable d'effectuer des mouvements de rotation autour desdites directions X,Y,Z et de translation selon lesdites directions X,Y,Z,
- ledit système de commande de vol (1) comportant
o au moins un organe de commande (31,32) muni conjointement de plusieurs axes de mobilité A,B,C,D,
o un pilote automatique (15) générateur d'ordres de commande selon des modes prédéfinis de fonctionnement et selon des consignes de vol, lesdits ordres de commande pouvant provoquer lesdits mouvements dudit aéronef (10) en rotation et/ou en translation par rapport auxdites directions X,Y,Z,
**caractérisé en ce que**
- au moins un organe de commande (31,32) est mobile par rapport à un premier axe A de mobilité pour entraîner une modification de ladite vitesse d'avancement Va indépendamment dudit angle de route sol TKₛₒₗ et de ladite pente P par une première action par rapport audit premier axe A de mobilité et par l'intermédiaire dudit pilote automatique (15),
- ledit au moins un organe de commande (31,32) est mobile par rapport à un second axe B de mobilité pour entraîner une modification dudit angle de route sol TKₛₒₗ indépendamment de ladite vitesse d'avancement Va et de ladite pente P par une seconde action par rapport audit second axe B de mobilité et par l'intermédiaire dudit pilote automatique (15), et
- ledit au moins un organe de commande (31,32) est mobile par rapport à un troisième axe C de mobilité pour entraîner une modification de ladite pente P indépendamment dudit angle de route sol TKₛₒₗ et de ladite vitesse d'avancement Va par une troisième action par rapport audit troisième axe C de mobilité et par l'intermédiaire dudit pilote automatique (15).

2. Système de commande de vol (1) pour aéronef à voilure tournante (10) selon la revendication 1,
**caractérisé en ce que** ledit au moins un organe de commande (31,32) est mobile par rapport à un quatrième axe D de mobilité pour entraîner une modification dudit angle de route sol TKₛₒₗ par une quatrième action par rapport audit quatrième axe D et par l'intermédiaire dudit pilote automatique (15).

3. Système de commande de vol (1) pour aéronef à voilure tournante (10) selon l'une quelconque des revendications 1 à 2,
**caractérisé en ce que** ledit angle de route sol TKₛₒₗ, ladite vitesse d'avancement Va et/ou ladite pente P dudit aéronef (10) sont alignés comme nouvelles consignes dudit pilote automatique (15) lors de chaque action sur ledit au moins un organe de commande (31,32).

4. Système de commande de vol (1) pour aéronef à voilure tournante (10) selon l'une quelconque des revendications 1 à 3,
**caractérisé en ce que** ledit aéronef comportant un premier levier de commande (21) permettant de commander des mouvements de rotation dudit aéronef (10) autour desdites directions longitudinale X et transversale Y et un second levier de commande (22) permettant de commander des mouvements de translation dudit aéronef (10) selon ladite direction d'élévation Z, selon un premier mode de fonctionnement secondaire dudit système de commande de vol (1), ledit premier organe de commande (31) est ledit premier levier de commande (21) et ledit second organe de commande (32) est ledit second levier de commande (22), ledit premier organe de commande (31) comportant ledit premier axe A de mobilité et ledit second axe B de mobilité, ledit second organe de commande (32) comportant ledit troisième axe C de mobilité.

5. Système de commande de vol (1) pour aéronef à voilure tournante (10) selon l'une quelconque des revendications 1 à 3,
**caractérisé en ce que** ledit aéronef (10) comportant un premier levier de commande (21) permettant de commander des mouvements de rotation dudit aéronef (10) autour desdites directions longitudinale X et transversale Y et un second levier de commande (22) permettant de commander des mouvements de translation dudit aéronef (10) selon ladite direction d'élévation Z, un premier organe de commande (31) est positionné sur ledit premier levier de commande (21) et un second organe de commande (32) est positionné sur ledit second levier de commande (22), ledit premier organe de commande (31) comportant ledit premier axe A de mobilité et ledit second axe B de mobilité, ledit second organe de commande (32) comportant ledit troisième axe C de mobilité.

6. Système de commande de vol (1) pour aéronef à voilure tournante (10) selon la revendication 5,
**caractérisé en ce que** ledit second organe de commande (32) comporte un quatrième axe D de mobilité.

7. Système de commande de vol (1) pour aéronef à voilure tournante (10) selon l'une quelconque des revendications 5 à 6,
**caractérisé en ce que** selon un second mode de fonctionnement secondaire dudit système de commande de vol (1), au moins un organe de commande (31,32) peut commander lesdits mouvements de rotation dudit aéronef (10) autour desdites directions longitudinale X et transversale Y ainsi que lesdits mouvements de translation dudit aéronef (10) selon ladite direction d'élévation Z.

8. Système de commande de vol (1) pour aéronef à voilure tournante (10) selon l'une quelconque des revendications 4 à 7,
**caractérisé en ce qu'**une action brutale sur le premier levier de commande (21) entraine une désactivation de la tenue de consigne de pente P par ledit pilote automatique, ledit premier levier de commande (21) commandant des mouvements de rotation dudit aéronef (10) autour desdites directions longitudinale X et transversale Y et ledit second levier de commande (22) commandant des mouvements de translation dudit aéronef (10) selon ladite direction d'élévation Z.

9. Système de commande de vol (1) pour aéronef à voilure tournante (10) selon l'une quelconque des revendications 1 à 8,
**caractérisé en ce que** lesdits organes de commande (31,32) sont calibrés et commandent des mouvements précis dudit aéronef (10).

10. Système de commande de vol (1) pour aéronef à voilure tournante (10) selon l'une quelconque des revendications 1 à 9, **caractérisé en ce que** ladite vitesse d'avancement Va est la vitesse d'avancement dudit aéronef (10) par rapport au sol.

11. Système de commande de vol (1) pour aéronef à voilure tournante (10) selon l'une quelconque des revendications 1 à 9,
**caractérisé en ce que** ladite vitesse d'avancement Va est la vitesse d'avancement dudit aéronef (10) par rapport à l'air.

12. Système de commande de vol (1) pour aéronef à voilure tournante (10) selon l'une quelconque des revendications 1 à 11,
**caractérisé en ce que**, si ladite vitesse d'avancement Va est inférieure à une certaine vitesse d'avancement, ladite pente P est remplacée par ladite vitesse verticale W_{z}.

13. Système de commande de vol (1) pour aéronef à voilure tournante (10) selon la revendication 12,
**caractérisé en ce que** ladite certaine vitesse d'avancement est égale à 20 noeuds (20kt).

14. Procédé de commande de vol pour un aéronef à voilure tournante (10), ledit aéronef (10) volant en suivant une trajectoire Tₛₒₗ par rapport au sol avec un angle de route sol TKₛₒₗ, une vitesse d'avancement Va, une pente P et un cap ψ, une direction longitudinale X s'étendant de l'arrière dudit aéronef (10) vers l'avant dudit aéronef (10), une direction d'élévation Z s'étendant de bas en haut perpendiculairement à ladite direction longitudinale X et une direction transversale Y s'étendant de gauche à droite perpendiculairement auxdites directions longitudinale X et d'élévation Z, ledit aéronef (10) comportant :
- au moins une voilure tournante (11) munie de plusieurs pales principales dont le pas collectif et le pas cyclique sont variables autour d'un axe de pas, ledit aéronef (10) étant capable d'effectuer des mouvements de rotation autour desdites directions X,Y,Z et de translation selon lesdites directions X, Y, Z,
- un pilote automatique (15) générateur d'ordres de commande selon des modes prédéfinis de fonctionnement et selon des consignes de vol, lesdits ordres de commande pouvant provoquer lesdits mouvements dudit aéronef (10) en rotation et/ou en translation par rapport auxdites directions X,Y,Z, et
- un système de commande de vol (1) comportant au moins un organe de commande (31,32) muni conjointement de plusieurs axes de mobilité A,B,C,D,
**caractérisé en ce que**
- l'on commande une modification de ladite vitesse d'avancement Va par une première action par rapport à un premier axe A de mobilité d'un organe de commande (31,32) et par l'intermédiaire dudit pilote automatique (15),
- on commande une modification dudit angle de route sol TKₛₒₗ par une seconde action par rapport à un second axe B de mobilité d'un organe de commande (31,32) et par l'intermédiaire dudit pilote automatique (15),
- on commande une modification de ladite pente P par une troisième action par rapport à un troisième axe C de mobilité d'un organe de commande (31,32) et par l'intermédiaire dudit pilote automatique (15).

15. Procédé de commande de vol pour aéronef à voilure tournante (10) selon la revendication 14,
**caractérisé en ce que** l'on commande une modification dudit angle de route sol TKₛₒₗ par rapport au sol dudit aéronef (10) par une quatrième action par rapport à un quatrième axe D de mobilité d'un organe de commande (31,32) et par l'intermédiaire dudit pilote automatique (15).

16. Procédé de commande de vol pour aéronef à voilure tournante (10) selon l'une quelconque des revendications 14 à 15,
**caractérisé en ce que** l'on aligne respectivement ledit angle de route sol TKₛₒₗ, ladite vitesse d'avancement Va et/ou bien ladite pente P comme nouvelle(s) consigne(s) dudit pilote automatique (15) lors de chaque action sur au moins un organe de commande (31,32).

17. Procédé de commande de vol pour aéronef à voilure tournante (10) selon l'une quelconque des revendications 14 à 16,
**caractérisé en ce que** selon un mode de fonctionnement secondaire dudit procédé de commande de vol, on commande lesdits mouvements de rotation dudit aéronef (10) autour desdites directions longitudinale X et transversale Y ainsi que lesdits mouvements de translation dudit aéronef (10) selon ladite direction d'élévation Z par l'intermédiaire d'au moins un organe de commande (31,32) et dudit pilote automatique (15).

18. Procédé de commande de vol (1) pour aéronef à voilure tournante (10) selon l'une quelconque des revendications 14 à 17,
**caractérisé en ce que**, si ladite vitesse d'avancement Va est inférieure à une certaine vitesse d'avancement, ladite pente P est remplacée par ladite vitesse verticale W_{z}.

## Patentansprüche

1. Flugsteuerungssystem (1) für ein Drehflügelflugzeug (10), wobei das Flugzeug (10) einen Kurs Tₛₒₗ relativ zum Boden fliegt, mit einem Kurswinkel über dem Boden TKₛₒₗ, einer Fluggeschwindigkeit Va, einer Neigung P und einem Kurs ψ, einer Längsrichtung X, die sich vom hinteren Ende des Flugzeugs (10) zum vorderen Ende des Flugzeugs (10) erstreckt, einer Höhenrichtung Z, die sich von unten nach oben senkrecht zu der Längsrichtung X erstreckt, und einer Querrichtung Y, die sich von links nach rechts senkrecht zur Längsrichtung X und zur Höhenrichtung Z erstreckt, wobei
- das Flugzeug (10) mindestens einen Drehflügel (11) aufweist mit mehreren Hauptrotorblättern, deren kollektive Anstellwinkelverstellung und deren zyklische Anstellwinkelverstellung um eine Anstellwinkelachse variabel sind, wobei das Flugzeug (10) Drehbewegungen um die Richtung X, Y, Z und Translationsbewegungen in diese Richtungen X, Y, Z ausüben kann,
- das Flugsteuerungssystem (1) aufweist:
o mindestens ein Steuerelement (31, 32), welches gleichzeitig mehrere Beweglichkeitsachsen A, B, C, D aufweist,
o einen Autopiloten (15), der Steuerbefehle gemäß vordefinierten Betriebsmodi und gemäß Flugaufträgen erzeugt, wobei die Steuerbefehle die Bewegungen des Flugzeugs (10) in Drehrichtung und/oder in Translationsrichtung bezüglich der Richtungen X, Y, Z bewirken können,
**dadurch gekennzeichnet, dass**
- mindestens ein Steuerelement (31, 32) bezüglich einer ersten Beweglichkeitsachse A beweglich ist, um eine Änderung der Fluggeschwindigkeit Va unabhängig von dem Kurswinkel über dem Boden TKₛₒₗ und der Neigung P durch eine erste Betätigung relativ zu der ersten Beweglichkeitsachse A und durch den Autopiloten (15) zu bewirken,
- das mindestens eine Steuerelement (31, 32) bezüglich einer zweiten Beweglichkeitsachse B beweglich ist, um eine Änderung des Kurswinkels über dem Boden TKₛₒₗ unabhängig von der Fluggeschwindigkeit Va und der Neigung P durch eine zweite Betätigung relativ zu der zweiten Beweglichkeitsachse B und durch den Autopiloten (15) zu bewirken, und
- das mindestens eine Steuerelement (31, 32) beweglich bezüglich einer dritten Beweglichkeitsachse C ist, um eine Änderung der Neigung P unabhängig von dem Kurswinkel über dem Boden TKₛₒₗ und der Fluggeschwindigkeit Va durch eine dritte Betätigung relativ zu der dritten Beweglichkeitsachse C und durch den Autopiloten (15) zu bewirken.

2. Flugsteuerungssystem (1) für ein Drehflügelflugzeug (10) nach Anspruch 1,
**dadurch gekennzeichnet, dass** das mindestens eine Steuerelement (31, 32) beweglich bezüglich einer vierten Beweglichkeitsachse D ist, um eine Änderung des Kurswinkels über dem Boden TKₛₒₗ durch eine vierte Betätigung relativ zu der vierten Achse D und durch den Autopiloten (15) zu bewirken.

3. Flugsteuerungssystem (1) für ein Drehflügelflugzeug (10) nach einem der Ansprüche 1 bis 2,
**dadurch gekennzeichnet, dass** der Kurswinkel über dem Boden TKₛₒₗ, die Fluggeschwindigkeit Va und/oder die Neigung des Flugzeugs (10) als neue Befehle des Autopiloten (15) während jeder Betätigung des mindestens einen Steuerelements (31, 32) angeglichen werden.

4. Flugsteuerungssystem (1) für ein Drehflügelflugzeug (10) nach einem der Ansprüche 1 bis 3,
**dadurch gekennzeichnet, dass** das Flugzeug einen ersten Steuerhebel (21) aufweist, der es ermöglicht, Drehbewegungen des Flugzeugs (10) um die Längsrichtung X und die Querrichtung Y zu steuern, und einen zweiten Steuerhebel (22), der es ermöglicht, Translationsbewegungen des Flugzeugs (10) in der Höhenrichtung Z gemäß einem ersten Sekundärbetriebsmodus des Flugsteuerungssystems (1) zu steuern, wobei das erste Steuerelement (31) der erste Steuerhebel (21) ist und das zweiten Steuerelement (32) der zweite Steuerhebel (22) ist, wobei das erste Steuerelement (31) die erste Beweglichkeitsachse A und die zweite Beweglichkeitsachse B aufweist, wobei das zweite Steuerelement (32) die dritte Beweglichkeitsachse C aufweist.

5. Flugsteuerungssystem (1) für ein Drehflügelflugzeug (10) nach einem der Ansprüche 1 bis 3,
**dadurch gekennzeichnet, dass** das Flugzeug (10) einen ersten Steuerhebel (21) aufweist, der es ermöglicht, Drehbewegungen des Flugzeugs (10) um die Längsrichtung X und die Querrichtung Y zu steuern, und einen zweiten Steuerhebel (22), der es ermöglicht, Translationsbewegungen des Flugzeugs (10) in der Höhenrichtung Z zu steuern, wobei das erste Steuerelement (31) auf dem ersten Steuerhebel (21) positioniert ist und ein zweites Steuerelement (32) auf dem zweiten Steuerhebel (22) positioniert ist, wobei das erste Steuerelement (31) die erste Beweglichkeitsachse A und die zweite Beweglichkeitsachse B aufweist, wobei das zweite Steuerelement (32) die dritte Beweglichkeitsachse C aufweist.

6. Flugsteuerungssystem (1) für ein Drehflügelflugzeug (10) nach Anspruch 5,
**dadurch gekennzeichnet, dass** das zweite Steuerelement (32) eine vierte Beweglichkeitsachse D aufweist.

7. Flugsteuerungssystem (1) für ein Drehflügelflugzeug (10) nach einem der Ansprüche 5 bis 6,
**dadurch gekennzeichnet, dass** gemäß einem zweiten Sekundärbetriebsmodus des Flugsteuerungssystems (1) mindestens ein Steuerelement (31, 32) die Drehbewegungen des Flugzeugs (10) um die Längsrichtung X und die Querrichtung Y sowie die Translationsbewegungen des Flugzeugs (10) in der Höhenrichtung Z steuern kann.

8. Flugsteuerungssystem (1) für ein Drehflügelflugzeug (10) nach einem der Ansprüche 4 bis 7,
**dadurch gekennzeichnet, dass** eine brachiale Betätigung des ersten Steuerhebels (21) zu einer Deaktivierung des Haltens des Einstellwertes der Neigung P durch den Autopiloten führt, wobei der erste Steuerhebel (21) die Drehbewegungen des Flugzeugs (10) um die Längsrichtung X und die Querrichtung Y steuert, und der zweite Steuerhebel (22) Translationsbewegungen des Flugzeugs (10) in der Höhenrichtung Z steuert.

9. Flugsteuerungssystem (1) für ein Drehflügelflugzeug (10) nach einem der Ansprüche 1 bis 8,
**dadurch gekennzeichnet, dass** die Steuerelemente (31, 32) kalibriert sind und genaue Bewegungen des Flugzeugs (10) steuern.

10. Flugsteuerungssystern (1) für ein Drehflügelflugzeug (10) nach einem der Ansprüche 1 bis 9,
**dadurch gekennzeichnet, dass** die Fluggeschwindigkeit Va die Fluggeschwindigkeit des Flugzeugs (10) relativ zum Boden ist.

11. Flugsteuerungssystem (1) für ein Drehflügelflugzeug (10) nach einem der Ansprüche 1 bis 9,
**dadurch gekennzeichnet, dass** die Fluggeschwindigkeit Va die Fluggeschwindigkeit des Flugzeugs (10) bezüglich der Luft ist.

12. Flugsteuerungssystem (1) für ein Drehflügelflugzeug (10) nach einem der Ansprüche 1 bis 11,
**dadurch gekennzeichnet, dass**, wenn die Fluggeschwindigkeit Va kleiner ist als eine bestimmte Fluggeschwindigkeit, die Neigung P durch die vertikale Geschwindigkeit W_{z} ersetzt wird.

13. Flugsteuerungssystem (1) für ein Drehflügelflugzeug (10) nach Anspruch 12,
**dadurch gekennzeichnet, dass** die bestimmte Fluggeschwindigkeit 20 Knoten (20 kt) beträgt.

14. Flugsteuerungsverfahren für ein Drehflügelflugzeug (10), wobei das Flugzeug (10) fliegt, indem es einem Kurs Tₛₒₗ relativ zum Boden folgt, mit einem Kurswinkel TKₛₒₗ über dem Boden, einer Fluggeschwindigkeit Va, einer Neigung P und einem Kurs Ψ, wobei sich eine Längsrichtung X von dem hinteren Ende des Flugzeugs (10) zum vorderen Ende des Flugzeugs (10) erstreckt, eine Höhenrichtung Z sich von unten nach oben senkrecht zu der Längsrichtung X und der Querrichtung Y, die sich von links nach rechts senkrecht zu der Längsrichtung X und der Höhenrichtung Z erstreckt, wobei das Flugzeug (10) aufweist:
- mindestens einen Drehflügel (11) mit mehreren Hauptrotorblättern, deren kollektive Anstellwinkelverstellung und deren zyklische Anstellwinkelverstellung um eine Anstellwinkelachse veränderbar sind, wobei das Flugzeug (10) Drehbewegungen um die Richtungen X, Y, Z und Translationsbewegungen in den Richtungen X, Y, Z ausführen kann,
- einen Autopiloten (15), der Steuerbefehle gemäß vordefinierten Betriebsmodi und gemäß Flugaufträgen erzeugt, wobei die Steuerbefehle die Bewegungen des Flugzeugs (10) in Drehrichtung und/oder in Translationsrichtung bezüglich der Richtungen X, Y, Z bewirken können, und
- ein Flugsteuerungssystem (1), das mindestens ein Steuerelement (31, 32) aufweist, das gleichzeitig mit mehreren Beweglichkeitsachsen A, B, C, D versehen ist,
**dadurch gekennzeichnet, dass**
- eine Änderung der Fluggeschwindigkeit Va durch eine erste Betätigung bezüglich einer ersten Beweglichkeitsachse A eines Steuerelements (31, 32) und durch den Autopiloten (15) gesteuert wird,
- eine Änderung des Kurswinkels TKₛₒₗ über dem Boden durch eine zweite Betätigung bezüglich einer zweiten Beweglichkeitsachse B eines Steuerelements (31, 32) und durch den Autopiloten (15) gesteuert wird,
- eine Änderung der Neigung P durch eine dritte Betätigung bezüglich einer dritten Beweglichkeitsachse C eines Steuerelements (31, 32) und durch den Autopiloten (15) gesteuert wird.

15. Flugsteuerungsverfahren für ein Drehflügelflugzeug (10) nach Anspruch 14,
**dadurch gekennzeichnet, dass** eine Änderung des Kurswinkels TKₛₒₗ über dem Boden relativ zu dem Boden des Flugzeugs (10) durch eine vierte Betätigung relativ zu einer vierten Beweglichkeitsachse D eines Steuerelements (31, 32) und durch den Autopiloten (15) gesteuert wird.

16. Flugsteuerungsverfahren für ein Drehflügelflugzeug (10) nach einem der Ansprüche 14 bis 15,
**dadurch gekennzeichnet, dass** jeweils der Kurswinkel über dem Boden TKₛₒₗ, die Fluggeschwindigkeit Va und/oder die Neigung P als neue Einstellwerte des Autopiloten (15) während jeder Betätigung mindestens eines Steuerelements (31, 32) angeglichen werden.

17. Flugsteuerungsverfahren für ein Drehflügelflugzeug (10) nach einem der Ansprüche 14 bis 16,
**dadurch gekennzeichnet, dass** in einem Sekundärbetriebsmodus des Flugsteuerungsverfahrens die Drehbewegungen des Flugzeugs (10) um die Längsrichtung X und die Querrichtung Y sowie die Translationsbewegungen des Flugzeugs (10) in der Höhenrichtung Z über mindestens ein Steuerelement (31, 32) und durch den Autopiloten (15) gesteuert werden.

18. Flugsteuerungsverfahren für ein Drehflügelflugzeug (10) nach einem der Ansprüche 14 bis 17,
**dadurch gekennzeichnet, dass**, wenn die Fluggeschwindigkeit Va kleiner als eine bestimmte Fluggeschwindigkeit ist, die Neigung P durch die Vertikalgeschwindigkeit W_{z} ersetzt wird.

## Claims

1. A flight control system (1) for a rotary-wing aircraft (10), said aircraft (10) flying along a trajectory Tₛₒₗ relative to the ground at a ground course angle TKₛₒₗ, a forward speed Va, a gradient P and a heaving ψ, a longitudinal direction X extending from the rear of said aircraft (10) to the front of said aircraft (10), an elevation direction Z extending upwards perpendicularly to said longitudinal direction X and a transverse direction Y extending from left to right perpendicularly to said longitudinal direction X and elevation direction Z,
- said aircraft (10) comprising at least one rotary wing (11) provided with a plurality of main blades, the collective pitch and the cyclic pitch of which are variable about a pitch axis, said aircraft (10) being capable of performing movements in rotation about said directions X, Y, Z and in translation in said directions X, Y, Z,
- said flight control system (1) comprising
o at least one control member (31, 32) provided jointly with a plurality of movement axes A, B, C, D,
o an autopilot (15) which generates control commands in accordance with predefined modes of operation and in accordance with flight setpoints, said control commands being capable of causing said movements in rotation and/or in translation relative to said directions X, Y, Z of said aircraft (10),
**characterised in that**
- at least one control member (31, 32) is movable relative to a first movement axis A in order to bring about a modification in said forward speed Va independently of said ground course angle TKₛₒₗ and of said gradient P by a first action relative to said first movement axis A and by means of said autopilot (15),
- said at least one control member (31, 32) is movable relative to a second movement axis B in order to bring about a modification in said ground course angle TKₛₒₗ independently of said forward speed Va and of said gradient P by a second action relative to said second movement axis B and by means of said autopilot (15), and
- said at least one control member (31, 32) is movable relative to a third movement axis C in order to bring about a modification in said gradient P independently of said ground course angle TKₛₒₗ and of said forward speed Va by a third action relative to said third movement axis C and by means of said autopilot (15).

2. A flight control system (1) for a rotary-wing aircraft (10) according to Claim 1, **characterised in that** said at least one control member (31, 32) is movable relative to a fourth movement axis D in order to bring about a modification in said ground course angle TKₛₒₗ by a fourth action relative to said fourth axis D and by means of said autopilot (15).

3. A flight control system (1) for a rotary-wing aircraft (10) according to any one of Claims 1 to 2,
**characterised in that** said ground course angle TKₛₒₗ, said forward speed Va and/or said gradient P of said aircraft (10) are aligned as new setpoints of said autopilot (15) upon each action on said at least one control member (31, 32).

4. A flight control system (1) for a rotary-wing aircraft (10) according to any one of Claims 1 to 3,
**characterised in that**, said aircraft comprising a first control lever (21) making it possible to control movements in rotation of said aircraft (10) about said longitudinal direction X and transverse direction Y and a second control lever (22) making it possible to control movements in translation of said aircraft (10) in said elevation direction Z, in accordance with a first secondary operating mode of said flight control system (1), said first control member (31) is said first control lever (21) and said second control member (32) is said second control lever (22), said first control member (31) comprising said first movement axis A and said second movement axis B, said second control member (32) comprising said third movement axis C.

5. A flight control system (1) for a rotary-wing aircraft (10) according to any one of Claims 1 to 3,
**characterised in that**, said aircraft (10) comprising a first control lever (21) making it possible to control movements in rotation of said aircraft (10) about said longitudinal direction X and transverse direction Y and a second control lever (22) making it possible to control movements in translation of said aircraft (10) in said elevation direction Z, a first control member (31) is positioned on said first control lever (21) and a second control member (32) is positioned on said second control lever (22), said first control member (31) comprising said first movement axis A and said second movement axis B, said second control member (32) comprising said third movement axis C.

6. A flight control system (1) for a rotary-wing aircraft (10) according to Claim 5,
**characterised in that** said second control member (32) comprises a fourth movement axis D.

7. A flight control system (1) for a rotary-wing aircraft (10) according to any one of Claims 5 to 6,
**characterised in that**, in accordance with a second secondary operating mode of said flight control system (1), at least one control member (31, 32) can control said movements in rotation of said aircraft (10) about said longitudinal direction X and transverse direction Y and also said movements in translation of said aircraft (10) in said elevation direction Z.

8. A flight control system (1) for a rotary-wing aircraft (10) according to any one of Claims 4 to 7,
**characterised in that** violent action on the first control lever (21) brings about deactivation of the holding of setpoint of gradient P by said autopilot, said first control lever (21) controlling movements in rotation of said aircraft (10) about said longitudinal direction X and transverse direction Y and said second control lever (22) controlling movements in translation of said aircraft (10) in said elevation direction Z.

9. A flight control system (1) for a rotary-wing aircraft (10) according to any one of Claims 1 to 8,
**characterised in that** said control members (31, 32) are calibrated and control precise movements of said aircraft (10).

10. A flight control system (1) for a rotary-wing aircraft (10) according to any one of Claims 1 to 9,
**characterised in that** said forward speed Va is the forward speed of said aircraft (10) relative to the ground.

11. A flight control system (1) for a rotary-wing aircraft (10) according to any one of Claims 1 to 9,
**characterised in that** said forward speed Va is the forward speed of said aircraft (10) relative to the air.

12. A flight control system (1) for a rotary-wing aircraft (10) according to any one of Claims 1 to 11,
**characterised in that**, if said forward speed Va is less than a certain forward speed, said gradient P is replaced by said vertical speed W_{z}.

13. A flight control system (1) for a rotary-wing aircraft (10) according to Claim 12, **characterised in that** said certain forward speed is equal to 20 knots (20 kt).

14. A flight control method for a rotary-wing aircraft (10), said aircraft (10) flying along a trajectory Tₛₒₗ relative to the ground at a ground course angle TKₛₒₗ, a forward speed Va, a gradient P and a heading ψ, a longitudinal direction X extending from the rear of said aircraft (10) to the front of said aircraft (10), an elevation direction Z extending upwards perpendicularly to said longitudinal direction X and a transverse direction Y extending from left to right perpendicularly to said longitudinal direction X and elevation direction Z, said aircraft (10) comprising:
- at least one rotary wing (11) provided with a plurality of main blades, the collective pitch and the cyclic pitch of which are variable about a pitch axis, said aircraft (10) being capable of performing movements in rotation about said directions X, Y, Z and in translation in said directions X, Y, Z,
- an autopilot (15) which generates control commands in accordance with predefined modes of operation and in accordance with flight setpoints, said control commands being capable of causing said movements of said aircraft (10) in rotation and/or in translation relative to said directions X, Y, Z, and
- a flight control system (1) comprising at least one control member (31, 32) provided jointly with a plurality of movement axes A, B, C, D,
**characterised in that**
- a modification of said forward speed Va is controlled by a first action relative to a first movement axis A of a control member (31, 32) and by means of said autopilot (15),
- a modification of said ground course angle TKₛₒₗ is controlled by a second action relative to a second movement axis B of a control member (31, 32) and by means of said autopilot (15),
- a modification of said gradient P is controlled by a third action relative to a third movement axis C of a control member (31, 32) and by means of said autopilot (15).

15. A flight control method for a rotary-wing aircraft (10) according to Claim 14, **characterised in that** a modification of said ground course angle TKₛₒₗ relative to the ground of said aircraft (10) is controlled by a fourth action relative to a fourth movement axis D of a control member (31,32) and by means of said autopilot (15).

16. A flight control method for a rotary-wing aircraft (10) according to any one of Claims 14 to 15,
**characterised in that** said ground course angle TKₛₒₗ, said forward speed Va and/or alternatively said gradient P are aligned respectively as new setpoint(s) of said autopilot (15) upon each action on at least one control member (31, 32).

17. A flight control method for a rotary-wing aircraft (10) according to any one of Claims 14 to 16,
**characterised in that**, in accordance with a secondary operating mode of said flight control method, said movements in rotation of said aircraft (10) about said longitudinal direction X and transverse direction Y and also said movements in translation of said aircraft (10) in said elevation direction Z are controlled by means of at least one control member (31, 32) and said autopilot (15).

18. A flight control method for a rotary-wing aircraft (10) according to any one of Claims 14 to 17,
**characterised in that**, if said forward speed Va is less than a certain forward speed, said gradient P is replaced by said vertical speed W_{z}.
